(19) Europäisches Patentamt
European Patent Office
Office européen des brevets

(11) EP 3 995 229 B1

(12) # EUROPEAN PATENT SPECIFICATION

(45) Date of publication and mention of the grant of the patent:
**30.08.2023 Bulletin 2023/35**

(21) Application number: **20834403.6**

(22) Date of filing: **06.07.2020**

(51) International Patent Classification (IPC):
***B22F 1/16*** (2022.01) ***B22F 3/02*** (2006.01)
***B22F 3/16*** (2006.01) ***B33Y 10/00*** (2015.01)
***B33Y 30/00*** (2015.01) ***B29C 64/165*** (2017.01)
***B29C 64/314*** (2017.01) ***B33Y 70/00*** (2020.01)
***C08K 3/34*** (2006.01) ***C08G 18/79*** (2006.01)
***B29C 64/30*** (2017.01) ***B33Y 40/20*** (2020.01)
***C04B 35/111*** (2006.01) ***C04B 35/14*** (2006.01)
***C04B 35/46*** (2006.01) ***C04B 35/486*** (2006.01)
***C04B 35/622*** (2006.01) ***C04B 35/628*** (2006.01)
***C04B 35/634*** (2006.01) ***B22F 1/102*** (2022.01)
***C08G 18/48*** (2006.01)

(52) Cooperative Patent Classification (CPC):
**C04B 35/111; B22F 1/102; B29C 64/165; B29C 64/30; B33Y 10/00; B33Y 40/20; B33Y 70/00; C04B 35/14; C04B 35/46; C04B 35/486; C04B 35/622; C04B 35/62802; C04B 35/62886; C04B 35/63416; C08G 18/42;**

(Cont.)

(86) International application number:
**PCT/JP2020/026493**

(87) International publication number:
**WO 2021/002479 (07.01.2021 Gazette 2021/01)**

(54) **METHOD AND APPARATUS FOR PRODUCING ADDITIVELY MANUFACTURED ARTICLE, CURING SOLUTION FOR ADDITIVE MANUFACTURING, AND KIT FOR ADDITIVE MANUFACTURING**

VERFAHREN UND VORRICHTUNG ZUR HERSTELLUNG EINES GENERATIV GEFERTIGTEN GEGENSTANDES, HÄRTUNGSLÖSUNG ZUR GENERATIVEN FERTIGUNG UND KIT ZUR GENERATIVEN FERTIGUNG

PROCÉDÉ ET APPAREIL DE PRODUCTION D’ARTICLE FABRIQUÉ DE MANIÈRE ADDITIVE, SOLUTION DE DURCISSEMENT POUR FABRICATION ADDITIVE, ET KIT POUR FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2019 JP 2019125603**
**30.09.2019 JP 2019179716**

(43) Date of publication of application:
**11.05.2022 Bulletin 2022/19**

(73) Proprietor: **Ricoh Company, Ltd.**
**Tokyo 143-8555 (JP)**

(72) Inventors:
- **SATOH, Shinichiroh**
  **Tokyo 143-8555 (JP)**
- **OYA, Naoki**
  **Tokyo 143-8555 (JP)**
- **YOKOYAMA, Takumi**
  **Tokyo 143-8555 (JP)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SOGAME, Junjiroh**
  **Tokyo 143-8555 (JP)**
- **MIYAZAKI, Kohsuke**
  **Tokyo 143-8555 (JP)**

(74) Representative: **Marks & Clerk LLP**
**15 Fetter Lane**
**London EC4A 1BW (GB)**



(56) References cited:

**CN-A- 108 296 416**
**JP-A- 2018 059 072**
**JP-A- 2019 084 778**
**US-A1- 2015 306 821**
**US-A1- 2018 133 953**
**US-A1- 2019 127 596**

(52) Cooperative Patent Classification (CPC): (Cont.)
**C08G 18/48; C08G 18/6212; C08G 18/73; C08G 18/792; C08G 18/8022;** B22F 10/14; B22F 10/68; C04B 2235/6026; Y02P 10/25

## Description

Technical Field

The present invention relates to a three-dimensional object producing method.

Background Art

In recent years, the need for low-lot production of complex and fine three-dimensional objects has grown. In order to meet this need, such techniques as the powder sintering method and the powder adhesion method have been proposed (see, for example, Patent documents 1 to 3).

In the powder sintering method, a thin layer of powder is formed, and is irradiated with laser light, to form a thin sintered body. Then, a new thin sintered body is stacked on the thin sintered body. This procedure is repeated to obtain a desired three-dimensional object. In the powder adhesion method, a thin layer of powder is cured using an adhesive material instead of performing laser sintering in the powder sintering method, to form a cured thin film. This procedure is repeated to obtain a desired three-dimensional object.

Examples of the powder adhesion method include: a method including supplying an adhesive material to a thin layer of powder through the inkjet method; a three-dimensional object producing method, the method including stacking a powder material obtained by mixing powder particles and adhesive agent particles, and applying a binder thereto to dissolve and solidify the adhesive material particles; and a three-dimensional object producing method, the method including providing a powder material coated with a hydrophobic resin on a base material such as glass or ceramics, dissolving the resin that coats the powder material using a hydrophobic solvent such as limonene, and solidifying the dissolved resin (see, for example, Patent documents 4 and 5). In order to prevent clogging or increase the variation of usable adhesive materials, a three-dimensional object producing method in which the materials of curing liquids used are selected has been proposed (see, for example, Patent document 6). Patent document 7 discloses a method for 3D printing using silica sand powder, aliphatic diisocyanate and a core shell resin. Patent document 8 discloses a 3D printing method using a composition comprising a surface-hydrophilic particle and a binding protein having a hydroxyl group, and an ink comprising a UV-curable resin having an isocyanate group.

Citation List

Patent Document

Patent document 1: Japanese Unexamined Patent Application Publication No. 2000-328106
Patent document 2: Japanese Unexamined Patent Application Publication No. 2006-200030
Patent document 3: Japanese Unexamined Patent Application Publication No. 2003-48253
Patent document 4: Japanese Unexamined Patent Application Publication No. 2004-330743
Patent document 5: Japanese Unexamined Patent Application Publication No. 2005-297325
Patent document 6: Japanese Patent No. 5920498
Patent document 7: CN 108 296 416 A
Patent document 8: US 2015/306821 A1


Summary of Invention

Technical Problem

An object of the present invention is to provide a three-dimensional object producing method, which can maintain the shape of a three-dimensional object even when the three-dimensional object is immersed in a solution and which can prevent sintering inhibition of the three-dimensional object caused by resin residues.

Solution to Problem

A means for solving the problem is as follows. Specifically, a three-dimensional object producing method of the present invention includes: forming a powder material layer with a powder material for three-dimensional object formation, where the powder material includes a base material and a resin including a reactive functional group; and applying a curing liquid to the powder material layer to form a cured product, where the curing liquid contains a curing

agent capable of forming a covalent bond with the reactive functional group. The curing agent includes an aliphatic compound having two or more isocyanate groups at a molecular terminal thereof.

Effects of the Invention

According to the present invention, it is possible to provide a three-dimensional object producing method, which can maintain the shape of a three-dimensional object even when the three-dimensional object is immersed in a solution and which can prevent sintering inhibition of the three-dimensional object caused by resin residues.

Brief Description of the Drawings

FIG. 1A is a schematic view presenting one example of a cross section of a powder material layer for describing the unit volume during object production.
FIG. 1B is a schematic view presenting another example of a cross section of a powder material layer for describing the unit volume during object production.
FIG. 2A is a schematic view presenting one example of the operation of an apparatus for producing a three-dimensional object.
FIG. 2B is a schematic view presenting another example of the operation of an apparatus for producing a three-dimensional object.
FIG. 2C is a schematic view presenting another example of the operation of an apparatus for producing a three-dimensional object.
FIG. 2D is a schematic view presenting another example of the operation of an apparatus for producing a three-dimensional object.
FIG. 2E is a schematic view presenting another example of the operation of an apparatus for producing a three-dimensional object.

DESCRIPTION OF THE EMBODIMENTS

(Three-dimensional object producing method and apparatus)

A three-dimensional object producing method of the present invention includes: a powder material layer forming step of forming a powder material layer with a powder material for three-dimensional object formation, where the powder material includes a base material and a resin including a reactive functional group; and a cured product forming step of applying a curing liquid to the powder material layer to form a cured product, where the curing liquid contains a curing agent capable of forming a covalent bond with the reactive functional group. The curing agent includes an aliphatic compound having two or more isocyanate groups at a molecular terminal thereof. The three-dimensional object producing method of the present invention further includes other steps such as an excess powder removing step and a sintering step if necessary. The powder material layer forming step and the cured product forming step are repeated to produce a three-dimensional object.

A three-dimensional object producing apparatus includes: a powder material layer forming unit configured to form a powder material layer with a powder material for three-dimensional object formation, where the powder material includes a base material and a resin including a reactive functional group; and a cured product forming unit configured to apply a curing liquid to the powder material layer to form a cured product, where the curing liquid contains a curing agent capable of forming a covalent bond with the reactive functional group. The curing agent includes an aliphatic compound having two or more isocyanate groups at a molecular terminal thereof. The three-dimensional object producing apparatus further includes a powder material housing unit and a curing liquid housing unit, and, if necessary, includes other units such as an excess powder removing unit and a sintering unit.

The present inventors obtained the following findings when studying the following problems in the related art.

When an adhesive material is supplied through the inkjet method, there are problems such as clogging in a nozzle head to be used, restrictions on the selection of usable adhesive materials, and high cost and inefficiency.

Also, the conventional techniques have the following problems. Specifically, even when a binding material is provided to dissolve adhesion particles, the dissolved adhesion liquid does not easily spread among powder particles in a uniform manner. Therefore, it may be difficult to give sufficient strength and precision to a three-dimensional object (sintering precursor).

In the conventional techniques, limonene easily remains on a three-dimensional object (sintering precursor) because of its low volatility, which possibly causes a decrease in strength. In addition, low volatile solvents such as

toluene have problems in terms of safety. Furthermore, in order to bind them with a coating resin, the thickness of a coating resin film needs to be thickened (the amount of the resin needs to be increased). Therefore, this causes such problems as insufficient precision of the three-dimensional object and a decrease in density of a base material contained in the three-dimensional object. Particularly, in case of applications of metallic sintered bodies or ceramic sintered bodies, which finally require post treatment processes such as degreasing of the resin and sintering, the density of a base material cannot be sufficiently high, and problems in terms of strength and precision of the sintered body are significantly observed.

The conventional techniques have such a problem that when the curing liquid or the resin contained in the powder material contains water and a base material to be used is a material having a high reactivity to water, they cannot be used. The conventional techniques further have the following problem. Specifically, a water resistant effect is low, and the removal liquid immersion method by which excess powder of a plurality of objects is treated at a time cannot be used because a crosslinking agent is an organometallic salt, a crosslinking structure to be formed is a chelate complex, and the crosslinking reaction is reversible. As a result of diligent studies, the present inventors found that the strength of an object produced by the powder adhesion method is weak, and that if the three-dimensional object is complicated and fine, its fine parts possibly collapse when excess powder is removed. They further found that it is difficult to remove excess powder in a pipe unreachable by blow air.

The present inventors found that when the curing agent is an aliphatic compound having two or more isocyanate groups at a molecular terminal thereof, the shape of a three-dimensional object can be maintained even when the three-dimensional object is immersed in a solution, sintering inhibition of the three-dimensional object due to residual resins can be prevented, and a three-dimensional object excellent in storage stability of a curing liquid can be obtained, in a three-dimensional object producing method, which includes a step of providing a curing agent capable of forming a covalent bond with the reactive functional group to a powder material for three-dimensional object formation, where the powder material includes a base material and a resin including a reactive functional group.

<Powder material layer forming step and powder material layer forming unit>

The powder material layer forming step is a step of forming a powder material layer with a powder material for three-dimensional object formation, where the powder material includes a base material and a resin including a reactive functional group.

The powder material layer forming unit is a unit configured to form a powder material layer with a powder material for three-dimensional object formation, where the powder material includes a base material and a resin including a reactive functional group.

-Base material-

The base material is not particularly limited and may be appropriately selected depending on the intended purpose, as long as it has at least one form of powder and particles. Examples of a material of the base material include metals, ceramics, carbon, and polymers. In terms of obtaining a three-dimensional object (cured product) having a very high strength, metals and ceramics, which can be finally subjected to the sintering treatment (step), are preferable.

The metals are not particularly limited as long as they contain a metal as a constituting material. Examples of the metals include magnesium (Mg), aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys of these metals. Among them, stainless steel (SUS), iron (Fe), copper (Cu), silver (Ag), titanium (Ti), aluminum (Al), and alloys of these metals are suitably used.

Examples of the aluminum alloys include AlSi10Mg, AlSi12, AlSi7Mg0.6, AlSi3Mg, AlSi9Cu3, Scalmalloy, and ADC12.

These may be used alone or in combination.

Examples of the ceramics include oxides, carbides, nitrides, and hydroxides.

Examples of the oxides include metallic oxides. Examples of the metallic oxides include silica ($SiO_2$), alumina ($Al_2O_3$), zirconia ($ZrO_2$), and titania ($TiO_2$). These are mere examples and not limiting. These may be used alone or in combination.

Examples of the carbon include graphite, graphene, carbon nanotubes, carbon nanohorns, and fullerenes.

Examples of the polymer include known resins insoluble in water.

These materials may be used alone or in combination.

As the base material, a commercially available product may be used.

Examples of the commercially available product include: pure Al (available from Toyo Aluminium K.K., A1070-30BB), pure Ti (available from OSAKA Titanium technologies Co., Ltd.), SUS316L (available from Sanyo Special

Steel Co., Ltd., product name: PSS316L); AlSi10Mg (available from Toyo Aluminium K.K., Si10MgBB); $SiO_2$ (available from Tokuyama Corporation, product name: EXCELICA SE-15K), $AlO_2$ (available from TAIMEI CHEMICALS CO., LTD., product name: TAIMICRON TM-5D), and $ZrO_2$ (available from Tosoh Corporation, product name: TZ-B53).

The base material may be subjected to a known surface treatment (surface modification treatment) for the purpose of improving the adhesive property with the resin or the coating property.

A volume average particle diameter of the base material is not particularly limited and may be appropriately selected depending on the intended purpose. For example, the volume average particle diameter of the base material is preferably 2 μm or more but 100 μm or less, more preferably 8 μm or more but 50 μm or less.

When the volume average particle diameter of the base material is 2 μm or more, an increase in aggregation is prevented, the base material is easily coated with a resin, a decrease in yield or a production efficiency of an object can be prevented, and a decrease in a operability or handling property of the base material can be prevented. When the average particle diameter is 100 μm or less, a decrease in contact between particles or an increase in voids can be prevented, and a decrease in the strength of the three-dimensional object and its sintered product can be prevented.

The particle size distribution of the base material is not particularly limited and may be appropriately selected depending on the intended purpose. The particle size distribution is preferably sharper.

The volume average particle diameter and the particle size distribution of the base material can be measured using known particle size measuring devices. Examples of the particle size measuring devices include particle size distribution measuring device MICROTRAC MT3000II series (available from MicrotracBEL).

The external shape, surface area, circularity, flowability, and wettability of the base material may be appropriately selected depending on the intended purpose.

The base material can be produced using conventionally known methods. Examples of a method for producing at least one of a powdery base material and a particulate base material include: a pulverization method where a solid is micronized by application of, for example, compression, impact, or friction; an atomization method where a molten metal is atomized to obtain a rapidly cooled powder; a precipitation method where ingredients dissolved in a liquid are precipitated; and a gas phase reaction method where gasification is followed by crystallization.

A method for producing the base material is not particularly limited and may be appropriately selected depending on the intended purpose. The method is, for example, an atomization method because a spherical shape can be obtained and a variation in particle diameter can be decreased. Examples of the atomization method include the water atomization method, the gas atomization method, the centrifugal atomization method, and the plasma atomization method, each of which can be suitably used.

-Resin-

The resin has a reactive functional group, may be dissolved in a curing liquid, and reacts with a curing agent contained in the curing liquid to form a crosslinked structure via a covalent bond.

Regarding the resin, the "being dissolved (soluble) in a curing liquid" means that, for example, when 1 g of the resin is mixed with 100 g of a solvent constituting a curing liquid at 30°C, followed by stirring, 90% by mass or more of the resin is dissolved.

Preferably, the resin has a low reactivity to powder of a metal having a high activity (highly active metal) as the base material, the resin prior to curing can be dissolved (soluble) in a removing liquid (organic solvent), and the resin after the curing (after crosslinking) cannot be soluble (insoluble) in the removing liquid (organic solvent). Particularly, the resin is preferably soluble in a removing liquid (organic solvent) that has a low solubility in water.

The resin preferably coats the surface of the base material. The surface of the base material coated with the resin can prevent dust explosion caused when the size of the base material particle is small. Preferably, the resin has a low reactivity to powder of a metal having a high activity (active metal) as the base material, the resin prior to application of the curing liquid can be dissolved (soluble) in the organic solvent, and the resin after application of the curing liquid (after crosslinking) cannot be soluble (insoluble) in the removing liquid (organic solvent). Particularly, the resin is preferably soluble in the organic solvent. As a result, the resin can be applied even when the base material is a highly active metal; a water-reactive material (e.g., aluminum and titanium), and the produced three-dimensional object can be prevented from disintegrating even when immersed in a solvent-based solution (removing liquid).

The reactive functional group is not particularly limited and may be appropriately selected depending on the intended purpose, as long as it reacts with a curing agent to form a covalent bond. Examples of the reactive functional group include a hydroxyl group, a carboxyl group, an amide group, a phosphate group, a thiol group, an acetoacetyl group, and an ether bond.

Among them, the resin preferably has a hydroxyl group in terms of improvement in adhesiveness with the base material and reactivity with a curing agent.

When the reactive functional group is a hydroxyl group, the following expression: $0.1 \leq N_{[NCO]}/N_{[OH]}$ is preferably satisfied, the following expression: $0.1 \leq N_{[NCO]}/N_{[OH]} < 1$ is more preferably satisfied, and the following expression:

$0.3 \leq N_{[NCO]}/N_{[OH]} < 1$ is most preferably satisfied, where $N_{[OH]}$ is an amount by mole of the hydroxyl group contained in the powder material per unit volume during object formation, and $N_{[NCO]}$ is an amount by mole of the isocyanate group contained in the curing liquid applied per unit volume during object formation.

The term "during object formation" means the time when the curing liquid is applied to a powder material for three-dimensional object formation in a cured product forming step that will be described hereinafter.

The term "unit volume" means the area (space, area surrounded by a rectangle) represented by the product of a square number of a resolution in object formation (a distance between the centers of adjacent nozzles) and an average thickness corresponding to one layer of the powder material layer.

Here, the "unit volume during object formation" will be described in details with reference to the drawings.

FIG. 1A is a schematic view presenting one example of a cross section of a powder material layer for describing the unit volume during object formation. FIG. 1B is a schematic view presenting another example of a cross section of a powder material layer for describing the unit volume during object formation.

FIG. 1A illustrates the state that liquid droplets of a curing liquid 102A are applied to a layered powder material for three-dimensional object formation 101 (powder material) in a cured product forming step of the present invention.

Here, the unit volume is the volume of a rectangle 111, which is represented by the product of a square represented by a square number of a resolution in object formation 111A and an average thickness 11B of one layer 101' of the powder material layer. In FIG. 1A, the barycenter of the square represented by the square number of the resolution in object formation 111A and the center position to which the liquid droplets 102A are overlapped.

As illustrated in FIG. 1B, a curing liquid 102B applied to the powder material layer spreads into the gaps between the particles of the powder material 101.

The "amount by mole of the hydroxyl group ($N_{[OH]}$) contained in the powder material per unit volume during object formation" is determined based on the following formula using an amount of the powder material contained in a region represented by the unit volume and an amount of the hydroxyl group contained in the powder material.

$$N_{[OH]}=\{(\text{amount [g] of a powder material for three-dimensional object formation contained in a region represented by a unit volume})\times(\text{resin coating amount [\% by mass]})/100\}\times(\text{hydroxyl value of a resin [mg/g KOH]})/(\text{molar mass of KOH: 56.1 [g/mol]})$$

Here, the "amount [g] of a powder material for three-dimensional object formation contained in a region represented by a unit volume" and the "resin coating amount [% by mass]" are determined as follows. The "hydroxyl value of a resin [mg/g KOH]" is measured according to "JIS K 1557-1 Part 1: Determination of hydroxyl value".

- Amount [g] of a powder material for three-dimensional object formation contained in a region represented by a unit volume=a volume occupancy rate of the powder material for three-dimensional object formation (determined as 50%)×(unit volume)×(powder true density (true density of a core material composition))
- Resin coating amount [% by mass]=Weight loss ratio of the powder material for three-dimensional object formation by TG-DTA

Here, the "weight loss ratio of the powder material for three-dimensional object formation by TG-DTA" is measured under the following conditions. The weight loss ratio is calculated using a difference between the weight of a powder material for three-dimensional object formation after the powder material is held at 550°C for 3 hours and the weight of the powder material at the beginning of the measurement. The measurement is performed three times, and an average value of the weight loss ratios obtained is defined as a resin coating amount [% by mass).

<Conditions>

- Amount of measurement sample: 10 g
- Measurement starting temperature: 25°C
- Temperature rise: 10°C/min
- Maintaining temperature: 550°C
- Maintaining time: 3 hours
- Measurement atmosphere: nitrogen
- Flow rate of gas of measurement atmosphere: 200 mL/min

The "amount by mole of $N_{[NCO]}$ of the isocyanate group contained in the curing liquid applied per unit volume during object formation" is calculated as follows. Note that, the curing liquid applied per unit volume during object formation is applied as a liquid droplet, the volume of the liquid droplet per droplet can be used.

First, according to JIS K 1603 (Part 1: determination of isocyanate group content), the content A of the isocyanate groups contained in the curing liquid is determined.

The mass B (g) of the curing liquid applied per unit volume during object formation is determined using the volume of the curing liquid applied per unit volume during object formation and the specific gravity (density) of the curing liquid.

The amount by mole of $N_{[NCO]}$ of the isocyanate group contained in the curing liquid applied per unit volume during object formation is obtained from the content A of isocyanate groups (% by mass), the mass B (g) of the curing liquid, and the molecular weight (42) of the isocyanate group.

When the $N_{[OH]}$ and the $N_{[NCO]}$ satisfy the following expression: $0.1 \leq N_{[NCO]}/N_{[OH]}$, the effect of maintaining the shape of a three-dimensional object can be improved even when the three-dimensional object is immersed in a solution.

When the $N_{[OH]}$ and the $N_{[NCO]}$ satisfy the following formula: $N_{[NCO]}/N_{[OH]}<1$, sintering inhibition caused due to a remaining resin can be prevented.

In order to prevent the resin from remaining on the three-dimensional object during sintering, 95% by mass or more of the resin preferably decomposes thermally when the resin alone is heated at 450°C.

Examples of the resin include polyol and polyvinyl alcohol.

Examples of the polyol include polyacrylic polyol (glass transition temperature: 80°C), polyester polyol (glass transition temperature: 133°C), polybutadiene polyol (glass transition temperature: -17°C), ethyl cellulose (glass transition temperature: 145°C), nitrocellulose (glass transition temperature: 50°C), polyether polyol, and phenol-based polyol.

Examples of the polyvinyl alcohol include polyvinyl acetal (glass transition temperature: 107°C), polyvinyl butyral (glass transition temperature: 67°C), partially saponified products of vinyl acetate copolymers (e.g., vinyl chloride-vinyl acetate and ethylene-vinyl acetate).

Among them, polyacrylic polyol or polyvinyl butyral is preferable because sintering inhibition caused due to a remaining resin can be prevented. These may be used alone or in combination.

The glass transition temperature of the resin refers to a glass transition temperature of a cured product of a homopolymer of the resin. The glass transition temperature (Tg) is either a value of the glass transition temperature (Tg) provided by a manufacturer in a catalogue, or a value measured using the differential scanning calorimetry (DSC) method in the following manner.

-Glass transition temperature (Tg) measurement method-

A polymerizable monomer can be allowed to polymerize through the general solution polymerization method.

A: A toluene solution of 10% by mass of a polymerizable monomer
B: 5% by mass of azobis isobutyronitrile as a polymerization initiator

The aforementioned A and B are sealed in a test tube while purged with nitrogen, and are shaken in a warm bath of 60°C for 6 hours, to synthesize a polymer. Then, the resultant is re-precipitated in a solvent (e.g., methanol or petroleum ether) in which the polymerizable monomer is soluble but the polymer is insoluble, and is filtrated, to extract the polymer. The obtained polymer is measured through DSC. The DSC device is DSC120U available from Seiko Instruments. The measurement can be performed at measurement temperatures of from 30°C to 300°C and a heating speed of 2.5 °C/min.

A weight average molecular weight of the resin preferably is preferably equal to or lower than a certain value.

The weight average molecular weight is preferably 150,000 or lower, more preferably 100,000 or lower, still more preferably 2,000 or higher but 100,000 or lower because sintering inhibition caused due to a remaining resin can be prevented. Preferably, the resin has a weight average molecular weight of 150,000 or lower and is a solid at normal temperature.

The hydroxyl value of the resin is preferably equal to or higher than a certain value.

The hydroxyl value is preferably 30 mg KOH/g or more, more preferably 100 mg KOH/g or more because sintering inhibition caused due to a remaining resin can be prevented.

The resin may be a commercially available product. Examples of the commercially available product include polyacrylic polyol (e.g., ACRYNAL TZ #9515, available from Toei Chemical Industry Co., Ltd), polyester polyol (e.g., POLYLITE OD-X-668, available from DIC Corporation, and ADEKA NEWACE YG-108, available from ADEKA Corporation), polybutadiene polyol (e.g., GQ-1000, available from Nippon Soda Co., Ltd.), polyvinyl butyral (e.g., MOWITAL B20H, available from Kuraray Co., Ltd.), polyvinyl acetal (e.g., S-LEC BM-2 and KS-1, available from SEKISUI CHEMICAL CO., LTD.), and ethyl cellulose (ETHOCEL, available from NISSIN-KASEI CO. LTD.).

A coating thickness of the resin on the base material is preferably 5 nm or more but 1,000 nm or less on average, more preferably 5 nm or more but 500 nm or less on average, still more preferably 50 nm or more but 300 nm or less on average, particularly preferably 100 nm or more but 200 nm or less on average.

In the present invention, because the curing action caused by the curing agent is used, the coating thickness can be smaller than the conventional ones, and a thin film can achieve both strength and accuracy.

When an average thickness as the coating thickness is 5 nm or more, the strength of a cured product (three-dimensional object), which is produced by a powder material for three-dimensional object formation (layer) formed by applying the curing liquid to the powder material, is improved, and problems such as disintegration at the time of the subsequent treatment (e.g., sintering) or at the time of handling, or at both the times. When the coating thickness is 1,000 nm or less, a cured product (three-dimensional object, precursor before sintering), which is produced by a powder material for three-dimensional object formation (layer) formed by applying the curing liquid to the powder material is improved in dimensional accuracy.

The average thickness can be determined as follows. For example, after the powder material for three-dimensional object formation is embedded in, for example, an acrylic resin, the surface of the base material is exposed through, for example, etching. Then, the thicknesses at any 10 portions are measured and its average value is calculated using, for example, a scanning tunneling microscope (STM), an atomic force microscope (AFM), or a scanning electron microscope (SEM).

A ratio (surface covering ratio) of the surface of the base material covered with the resin to a surface area of the base material is not particularly limited as long as the resin covers the surface of the base material to such an extent as to achieve the effect of the present invention. The surface covering ratio is, for example, preferably 15% or more, more preferably 50% or more, particularly preferably 80% or more.

The surface covering ratio of 15% or more will achieve: a sufficient strength of a cured product (three-dimensional object), which is produced by a powder material for three-dimensional object formation (layer) formed by applying the curing liquid to the powder material); elimination of problems such as disintegration at the time of the subsequent treatment (e.g., sintering) or handling, or at both the times; and improvement of the dimensional accuracy of a cured product (three-dimensional object), which is produced by a powder material for three-dimensional object formation (layer) formed by applying the curing liquid to the powder material).

The surface covering ratio can be measured in the following manners, for example. Specifically, the photograph of the powder material is observed. Then, any 10 particles of the powder material observed in a two-dimensional photograph are measured for a ratio (%) of an area of a part covered with the resin to a total area of the surfaces of the powder material particles. A calculated average value of the ratios may be the surface covering ratio. Alternatively, a part covered with the resin may be subjected to element mapping through energy dispersive X-ray spectroscopy such as SEM-EDS, to measure the surface covering ratio.

-Other ingredients-

The other ingredients are not particularly limited and may be appropriately selected depending on the intended purpose. Examples thereof include a fluidizing agent, a filler, a levelling agent, a sintering aid, and polymer resin particles.

Use of the fluidizing agent is preferable in that it can easily and efficiently form, for example, a layer of the powder material for three-dimensional object formation.

The filler is a material that is effective mainly for attachment onto the powder material for three-dimensional object formation and for filling into the gap between the powder materials. The effects of the filler are, for example, improving fluidity of the powder material for three-dimensional object formation, and increasing contacts between the powder materials for three-dimensional object formation to reduce the gaps. The filler, therefore, can increase the strength of a three-dimensional object and the dimensional accuracy thereof.

The levelling agent is a material that is effective mainly for control of wettability on the surfaces of the powder for three-dimensional object formation. The effects of the levelling agent are, for example, increasing permeability of the curing liquid into the power layer to increase the strength of a three-dimensional object and the rate thereof, and stably maintain the shape thereof.

The sintering aid is a material that is effective for increasing the sintering efficiency in sintering a three-dimensional object. The effects of the sintering aid are, for example, increasing the strength of a three-dimensional object and lowering the sintering temperature to shorten the sintering duration.

-Method for producing powder material for three-dimensional object formation-

A method for producing the powder material for three-dimensional object formation is not particularly limited and may be appropriately selected depending on the intended purpose. An exemplary suitable method thereof is a method of coating the resin on the base material by a known coating method.

A method of coating the resin onto the surface of the base material is not particularly limited and may be appropriately selected from known coating methods. Suitable examples of the coating methods include the rolling fluidizing coating method, the spray drying method, the stirring mixing addition method, the dipping method, and the kneader coating method. These coating methods can be performed using, for example, commercially available known various coating devices and granulating devices.

-Physical properties, etc. of powder material for three-dimensional object formation-

A volume average particle diameter of the powder material for three-dimensional object formation is not particularly limited and may be appropriately selected depending on the intended purpose. The volume average particle diameter thereof is 3 μm or more but 250 μm or less, more preferably 3 μm or more but 200 μm or less, further preferably 5 μm or more but 150 μm or less, particularly preferably 10 μm or more but 85 μm or less.

When the volume average particle diameter is 3 μm or less, the powder material increases in fluidity to easily form a powder material layer, resulting in increase in smoothness of the surface of the stacked layer. Thus, the production efficiency of a three-dimensional object, operability and handling property, and dimensional accuracy tend to improve. When the average particle diameter 250 μm or less, the spaces between particles of the powder material become smaller, resulting in a small porosity of the three-dimensional object to contribute to increase in the strength. Accordingly, it is preferable that the volume average particle diameter be 3 μm or more but 250 μm or less in terms of achieving both satisfactory dimensional accuracy and both satisfactory strength.

A particle size distribution of the powder material for three-dimensional object formation is not particularly limited and may be appropriately selected depending on the intended purpose.

Regarding properties of the powder material for three-dimensional object formation, when an angle of repose thereof is measured, the angle of repose is preferably 60° or less, more preferably 50° or less, further preferably 40° or less.

When the angle of repose is 60° or less, it is possible to efficiently and stably place the powder material for three-dimensional object formation at a desired location on a support.

The angle of repose can be measured using, for example, a powder characteristics measuring device (Powder Tester PT-N, available from HOSOKAWA

MICRON CORPORATION).

The powder material for three-dimensional object formation can be suitably used for convenient and efficient production of various kinds of molded products and structures, and particularly suitably can be used for the below-described kit for three-dimensional object formation, three-dimensional object producing method of the present invention, and three-dimensional object producing apparatus.

Only by applying the curing liquid to the powder material for three-dimensional object formation, is it possible to simply and efficiently produce a structure of a complex three-dimensional shape with a good dimensional accuracy. The thus-obtained structure is a cured product (three-dimensional object) having sufficient hardness. This structure does not disintegrate even if held in hand, put in and out the mold, and subjected to an air blow treatment to remove the excess powder material for three-dimensional object formation. Thus, it has excellent operability and handling property. The cured product may be used as is, or may be used as a cured product for sintering, which is further subjected to a sintering treatment to obtain a molded product (sintered body of the three-dimensional object). The sintering treatment does not form, for example, unnecessary pores in the molded product after sintering and can easily produce a molded product having an aesthetic appearance.

--Formation of powder material layer--

A method of placing the powder material for three-dimensional object formation on a support (on an object forming stage) to form a powder material layer is not particularly limited and may be appropriately selected depending on the intended purpose. Suitable examples of a method of placing the powder material for three-dimensional object formation in the form of a thin layer include: a method of using, for example, a known counter rolling mechanism (counter roller), used in the selective laser sintering method described in Japanese Patent No. 3607300; a method of spreading the powder material for three-dimensional object formation into the form of a thin layer using such a member as a brush, a roller, or a blade; a method of spreading the powder material for three-dimensional object formation into the form of a thin layer using a press member to press the surface of the powder material for three-dimensional object formation; and a method of using a known powder additive manufacturing apparatus.

For the powder material layer forming unit, placing the powder material for three-dimensional object formation on the support in the form of a thin layer using, for example, the counter rolling mechanism (counter roller), at least one of the brush and the blade, or the press member may be performed in the following manner.

That is, using, for example, the counter rolling mechanism (counter roller), the brush, roller, or blade, or the press member, the powder material for three-dimensional object formation is placed on the support disposed within an outer frame (which may also be referred to as "mold", "hollow cylinder", and "tubular structure") in a manner that the support can be lifted up and down while sliding on the internal wall of the outer frame. When the support used is a member that can be lifted up and down within the outer frame, the support may be disposed at a position slightly below the upper end opening of the outer frame, i.e., at a position below the upper end opening by what corresponds to the thickness of the powder layer for three-dimensional object formation, and then the powder material for three-dimensional object formation may be placed on the support. In this way, the powder material for three-dimensional object formation can be placed on the support in the form of a thin layer.

When the above curing liquid, which will be described below, is caused to act on the powder material for three-dimensional object formation placed in the form of a thin layer in the manner described above, the layer cures (the cured product forming step).

When the powder material for three-dimensional object formation is placed in the form of a thin layer in the same manner as described above on the cured product of the thin layer obtained above and the curing liquid is caused to act on the powder material (layer) for three-dimensional object formation placed in the form of a thin layer, curing occurs. This curing occurs not only in the powder material (layer) for three-dimensional object formation placed in the form of a thin layer but also between the powder material for three-dimensional object formation and the underlying cured product of the thin layer obtained by the previous curing. As a result, a cured product (three-dimensional object) having a thickness corresponding to about two layers of the powder material (layer) for three-dimensional object formation placed in the form of a thin layer is obtained.

Alternatively, an automatic, quick manner using the known powder additive manufacturing apparatus may be employed to place the powder material for three-dimensional object formation on the support in the form of a thin layer. Typically, the powder additive manufacturing apparatus includes a recoater configured to laminate layers of the powder material for three-dimensional object formation, a movable supplying tank configured to supply the powder material for three-dimensional object formation onto the support, and a movable forming tank in which the powder material for three-dimensional object formation is placed in the form of a thin layer and laminated. In the powder additive manufacturing apparatus, it is possible to constantly dispose the surface of the supplying tank slightly above the surface of the forming tank by lifting up the supplying tank, by lifting down the forming tank, or by both, it is possible to place the powder material for three-dimensional object formation in the form of a thin layer by actuating the recoater from the supplying tank side, and it is possible to laminate thin layers of the powder material for three-dimensional object formation by repeatedly moving the recoater.

A thickness of the powder material layer for the three-dimensional object is not particularly limited and may be appropriately selected depending on the intended purpose. For example, an average thickness of the powder material layer in one layer thereof is preferably 30 μm or more but 500 μm or less, more preferably 60 μm or more but 300 μm or less.

When the average thickness is 30 μm or more, the strength of a cured product (three-dimensional object), which is produced by a powder material for three-dimensional object formation (layer) formed by applying the curing liquid to the powder material, can be sufficient, and problems such as disintegration at the time of a subsequent treatment (e.g., sintering) or handling do not occur. When the average thickness is 500 μm or less, it is possible to improve the dimensional accuracy of a cured product (three-dimensional object), which is produced by a powder material for three-dimensional object formation (layer) formed by applying the curing liquid to the powder material.

The average thickness is not particularly limited and can be measured by any of the known methods.

<Cured product forming step and cured product forming unit>

The cured product forming step is a step of applying a curing liquid to the powder material layer to form a cured product, where the curing liquid contains a curing agent capable of forming a covalent bond with the reactive functional group.

The cured product forming unit is a unit configured to apply a curing liquid to the powder material layer to form a cured product, where the curing liquid contains a curing agent capable of forming a covalent bond with the reactive functional group.

The "cured product", which is obtained by applying a curing liquid to the powder material layer to form a cured product, where the curing liquid contains a curing agent capable of forming a covalent bond with the reactive functional group, may be referred to as "green body", "sintering precursor", or "three-dimensional object".

-Curing liquid-

The curing liquid includes a curing agent capable of forming a covalent bond with the reactive functional group, preferably includes a first organic solvent, and further includes other ingredients if necessary.

--Curing agent--

The curing agent can form a covalent bond with the reactive functional group. When the curing agent forms a covalent bond with the reactive functional group of the resin, a crosslinked structure is formed, and the strength of the obtained three-dimensional object is further increased, improving solvent resistance. Here, in the present invention, the "curing agent" is synonymous with the "crosslinking agent".

The curing agent is an aliphatic compound having two or more isocyanate groups at a molecular terminal thereof (aliphatic isocyanate).

The aliphatic compound (aliphatic isocyanate) is a compound where an aliphatic hydrocarbon is directly connected to an isocyanate group.

The aliphatic compound is preferably a straight-chain aliphatic hydrocarbon directly connected to the isocyanate group and an alicyclic aliphatic hydrocarbon directly connected to the isocyanate group, and is more preferably the straight-chain aliphatic hydrocarbon. The straight-chain aliphatic hydrocarbon directly connected to the isocyanate group can improve storage stability.

Examples of the aliphatic compound having two or more isocyanate groups at a molecular terminal thereof include diisocyanate and polyisocyanate.

The aliphatic compound having two or more isocyanate groups at a molecular terminal thereof is at least one selected from the group consisting of Formula (1) and Formula (2) below.

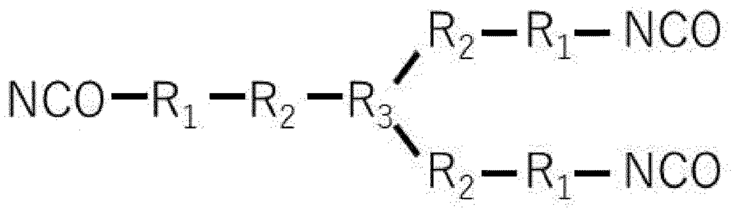

Formula (1)

In the Formula (1),

$R_1$ represents an aliphatic hydrocarbon group,

$R_2$ is at least one selected from the group consisting of a urethane bond, an amide bond, an ester bond, and an ether bond, and

$R_3$ is represented by at least one selected from the group consisting of Formula (1-1) to Formula (1-6) below that each may have a substituent, where, in the Formula (1-1) to the Formula (1-6), $Y^1$ represents an alkyl group, and $Y^2$ to $Y^7$ each independently represent an alkylene group.

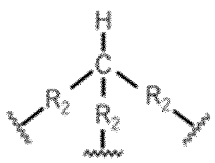

Formula (1-1)

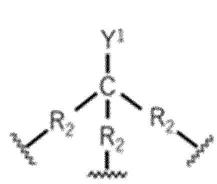

Formula (1-2)

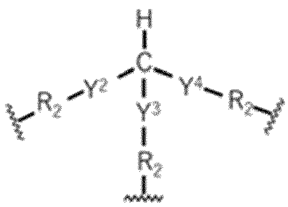

Formula (1-3)

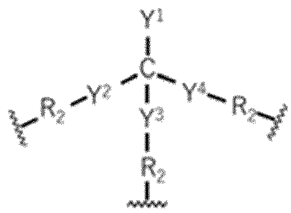

Formula (1-4)

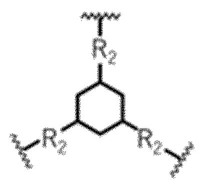

Formula (1-5)

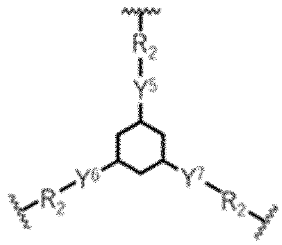

Formula (1-6)

$NCO-R_1-R_2-R_4-R_2-R_1-NCO$ Formula (2)

In the Formula (2),

$R_1$ represents an aliphatic hydrocarbon group,
$R_2$ is at least one selected from the group consisting of a urethane bond, an amide bond, an ester bond, and an ether bond, and
$R_4$ is an alkylene group that may have a substituent.

The compounds represented by the Formula (1) and the Formula (2) are preferably aliphatic compounds where $R_1$ is straight chain.

The aliphatic compound having two isocyanate groups at a molecular terminal thereof is at least one selected from the group consisting of the Formula (1) and the Formula (2). More preferably, in the Formula (1) and the Formula (2), the $R_1$ represents an alkylene group having 1 or more but 6 or less carbon atoms, the $R_2$ represents a urethane bond, the $R_3$ represents at least one selected from the group consisting of the Formula (1-2) and the Formula (1-3) each of which may have a substituent, where $Y^1$ represents an alkyl group having 1 or more but 4 or less carbon atoms, and $Y^2$ to $Y^4$ each independently represent an alkylene group having 1 or more but 6 or less carbon atoms, and the $R_4$ represents an alkylene group having 1 or more but 4 or less carbon atoms that may have a substituent.

Still more preferably, the aliphatic compound having two or more isocyanate groups at a molecular terminal thereof is at least one selected from the group consisting of the Formula (1) and the Formula (2) where the $R_1$ represents an alkylene group having 6 carbon atoms, the $R_2$ represents a urethane bond, the $R_3$ represents at least one selected from the group consisting of the Formula (1-2) and the Formula (1-3), where $Y^1$ represents a methyl group, and $Y^2$ to $Y^4$ represent an alkylene group having 6 carbon atoms, and the $R_4$ represents an alkylene group having 2 carbon atoms.

Examples of the diisocyanate include adducts of aliphatic isocyanates such as hexamethylene diisocyanate (HMDI) and pentamethylene diisocyanate (PDI) with diol compounds.

Examples of the polyisocyanate include allophanates and adducts with triols of the diisocyanate.

The isocyanate may be a commercially available product. Examples of the commercially available product include: TAKENATE D110N, D120N, D140N, D160N, D170N, D165N, D127N, D178NL, D103H, and D204EA-1, and STABIO D370N and D376N (available from Mitsui Chemicals, Inc.); and DURANATE D101, D201, and A201H (available from Asahi Kasei Corp.).

These may be used alone or in combination.

An amount of the curing agent relative to the total amount of the curing liquid is not particularly limited and may be appropriately selected depending on the intended purpose. The amount of the curing agent is preferably 1.0% by mass or more, more preferably 5.0% by mass or more, still more preferably 5.0% by mass or more but 50% by mass or less. When the amount of the curing agent relative to the total amount of the curing liquid is 1.0% by mass or more but 50% by mass or less, the strength of the obtained three-dimensional object can be prevented from decreasing, the viscosity of the curing liquid can be prevented from increasing or gelling, and the liquid storage stability and the viscosity stability can be prevented from decreasing. In particular, the amount of the curing agent relative to the total amount of the curing liquid is preferably1.0% by mass or more but 50% by mass or less with respect to 3 parts by mass of the resin in the powder material for three-dimensional object formation.

--First organic solvent--

The first organic solvent is a liquid ingredient for maintaining the curing liquid as a liquid form at normal temperature.

The first organic solvent preferably has a saturated vapor pressure of 2,000 Pa or less at 25°C, and is more preferably insoluble or slightly soluble in water.

Here, the "insoluble or slightly soluble in water" means that the solubility in water is 80 g/L or less.

When the first organic solvent has a saturated vapor pressure of 2,000 Pa or less at 25°C, nozzles can be prevented from being dried when a device is not in operation (in the standby mode), so that the discharge stability can be improved.

At 25°C, the first organic solvent can preferably dissolve 1% by mass or more of the resin contained in the powder material for three-dimensional object formation, and can more preferably dissolve 5% by mass or more of the resin. When the first organic solvent can dissolve 1% by mass or more of the resin contained in the powder material for three-dimensional object formation at 25°C, the strength of the three-dimensional object before sintering can be increased.

Examples of the first organic solvent include aliphatic hydrocarbons or aromatic hydrocarbons such as n-octane (boiling point: 125.6°C, saturated vapor pressure: 1.86 kPa (25°C)), m-xylene (boiling point: 139°C, saturated vapor pressure: 0.8 kPa (20°C)), and solvent naphtha (boiling point: 150°C or more, saturated vapor pressure: 0.1 kPa to 1.4

kPa (20°C)); ketones such as diisobutyl ketone (boiling point: 168°C, saturated vapor pressure: 0.23 kPa (20°C)), 3-heptanone (boiling point: 146°C to 149°C, saturated vapor pressure: 1.4 kPa (25°C)), 2-octanone (boiling point: 172.5°C, saturated vapor pressure: 1.35 kPa (25°C)), and acetylacetone (boiling point: 138°C, saturated vapor pressure: 0.93 kPa); esters such as butyl acetate (boiling point: 126°C, saturated vapor pressure: 1.53 kPa (25°C)), amyl acetate (boiling point: 142°C, saturated vapor pressure: 0.747 kPa (25°C)), n-hexyl acetate (boiling point: 168°C to 170°C, saturated vapor pressure: 0.5 kPa (20°C)), n-octyl acetate (boiling point: 210°C), ethyl butyrate (boiling point: 121°C, saturated vapor pressure: 0.17 kPa (20°C)), ethyl valerate (boiling point: 145°C), ethyl caprylate (boiling point: 208°C, saturated vapor pressure: 0.2 kPa (20°C)), ethyl octanoate (boiling point: 208°C, saturated vapor pressure: 0.003 Pa (25°C)), ethyl acetoacetate (boiling point: 181°C, saturated vapor pressure: 0.1 kPa (20°C)), ethyl 3-ethoxypropionate (boiling point: 166°C, saturated vapor pressure: 0.2 kPa (25°C)), diethyl oxalate (boiling point: 182°C to 186°C, saturated vapor pressure: 0.027 kPa (20°C)), diethyl malonate (boiling point: 199°C, saturated vapor pressure: 0.13 kPa (40°C)), diethyl succinate (boiling point: 215°C to 217°C, saturated vapor pressure: 0.133 kPa (55°C)), diethyl adipate (boiling point: 245°C), bis 2-ethylhexyl maleate (boiling point: 173°C), triacetin (boiling point: 258°C, saturated vapor pressure: 0.00033 Pa (25°C)), tributyrin (boiling point: 190°C), propylene glycol monomethyl ether acetate (boiling point: 146°C, saturated vapor pressure: 0.5 kPa), and ethylene glycol monobutyl ether acetate (boiling point: 192°C, saturated vapor pressure: 0.031 kPa (25°C)); and ethers such as dibutyl ether (boiling point: 142°C, saturated vapor pressure: 0.64 kPa (25°C)), 1,2-dimethoxybenzene (boiling point: 206°C to 207°C, saturated vapor pressure: 0.063 kPa (25°C)), 1,4-dimethoxybenzene (boiling point: 213°C, saturated vapor pressure: less than 0.13 kPa (25°C)), and diethylene glycol monobutyl ether (butyl carbitol, boiling point: 230°C, saturated vapor pressure: 0.0013 kPa). Moreover, compounds that are not described above may be appropriately selected depending on the intended purpose without any limitation as long as they have a vapor pressure of 2,000 Pa or less and can dissolve 1% by mass or more of the resin contained in the powder material for three-dimensional object formation at 25°C. These may be used alone or in combination.

An amount of the first organic solvent relative to the total amount of the curing liquid is preferably 30% by mass or more but 90% by mass or less, more preferably 50% by mass or more but 80% by mass or less. When the amount of the first organic solvent relative to the total amount of the curing liquid is 30% by mass or more but 90% by mass or less, the solubility of the resin can be increased, and the strength of the three-dimensional object can be increased. In addition, nozzles can be prevented from being dried when a device is not in operation (in the standby mode), which can prevent liquid clogging and occurrence of non-printed areas due to nozzles that do not discharge.

--Other ingredients--

The other ingredients are not particularly limited and may be appropriately selected depending on the intended purpose. Examples of the other ingredients include drying preventing agents, viscosity modifiers, surfactant, penetrants, defoaming agents, pH adjusting agents, antiseptic agents, fungicides, colorants, preservatives, and stabilizers. These conventionally known materials can be added to the curing liquid without any limitation.

A method for preparing the curing liquid is not particularly limited and may be appropriately selected depending on the intended purpose. Examples of the method include a method where the aforementioned materials are mixed under stirring.

A method for applying, to the powder material layer, a curing liquid that contains a curing agent capable of forming a covalent bond with the reactive functional group is not particularly limited and may be appropriately selected depending on the intended purpose. Examples of the method include the dispenser method, the spray method, and the inkjet method. In order to perform these methods, known apparatuses can be suitably used as the cured product forming unit.

Among these methods, the dispenser method applies liquid droplets highly quantitatively, but has a possible coating area that is small. The spray method can form minute discharged materials easily and has a wide coating area and excellent coatability, but does not apply liquid droplets quantitatively and causes the powder material for three-dimensional object formation to scatter due to a spray current. Hence, in the present invention, the inkjet method is particularly preferable. The inkjet method is preferable because the inkjet method is better than the spray method in the ability to discharge in the intended amount, can achieve a larger coating are than in the dispenser method, and can efficiently form a complex three-dimensional shape with a good accuracy.

In the case of the inkjet method, the cured product forming unit includes nozzles capable of applying the curing liquid to the powder material layer by the inkjet method. Inkjet heads of a known inkjet printer can be suitably used as the nozzles. Suitable examples of the inkjet heads of the inkjet printer include industrial-use inkjet RICOH MH/GH SERIES. The inkjet heads are preferable because the inkjet heads can realize rapid coating owing to the capability of dropping a curing liquid in a large amount at one time and coating a large area.

In the present invention, use of the inkjet printer capable of applying the curing liquid accurately and highly efficiently is advantageous to the liquid because the curing liquid, which does not contain solid matters very much, such as particles and polymeric high-viscosity materials such as resins, will not, for example, clog or corrode the nozzles or

the nozzle heads, or both, of the inkjet printer, can efficiently permeate the resin of the powder material for three-dimensional object formation when applied (discharged) to a layer of the powder material for three-dimensional object formation, ensuring an excellent productivity of a three-dimensional object and ensuring that a cured product having a good dimensional accuracy can be obtained easily, in a short time, and efficiently.

-Powder material housing unit-

The powder material housing unit is a member in which the powder material for three-dimensional object formation is stored. For example, the size, shape, and material of the powder material housing unit are not particularly limited and may be appropriately selected depending on the intended purpose. Examples of the powder material housing unit include a reservoir, a bag, a cartridge, and a tank.

-Curing liquid housing unit-

The curing liquid housing unit is a member in which the curing liquid is stored. For example, the size, shape, and material of the curing liquid housing unit are not particularly limited and may be appropriately selected depending on the intended purpose. Examples of the curing liquid housing unit include a reservoir, a bag, a cartridge, and a tank.

-Other steps and other units-

Examples of the other steps include an excess powder removing step, a drying step, a degreasing step, a sintering step, a surface protection treatment step, and a painting step.

Examples of the other units include an excess powder removing unit, a drying unit, a degreasing unit, a sintering unit, a surface protection treatment unit, and a painting unit.

The excess powder removing step is a step of, after the cured product forming step, removing an uncured powder material for three-dimensional object formation using a removing liquid.

The three-dimensional object is in a state of being buried in an object-unformed portion that has not been given the curing liquid (uncured powder material for three-dimensional object formation). When the three-dimensional object is taken out from this buried state, an excess (uncured) powder material for three-dimensional object formation is attached around or on the surface of the three-dimensional object, or to the interior of the structure. The excess powder material is difficult to remove in a simple manner. Removal of the excess powder material is more difficult when the surface of the three-dimensional object has complex protrusions and recesses, and the interior of the three-dimensional object has a structure like a channel. In a typical binder jetting method, the strength of a sintering precursor (the same as the three-dimensional object) is not high. Increasing the pressure of an air blow (0.3 MPa or higher) may cause disintegration of the sintering precursor.

The three-dimensional object formed from the powder for three-dimensional object formation and the curing liquid used in the present invention has an enough strength to resist the pressure of an air blow by virtue of the resin contained in the curing liquid that dissolves and solidifies more by the action of the curing agent contained in the curing liquid

The strength of the sintering precursor is preferably 3 MPa or more, more preferably 5 MPa or more, in terms of three-point bending stress.

In addition to increasing the strength, simple removal of the excess powder attached to the surface and the interior is achieved by immersing the cured product (three-dimensional object, resin cured product) in the removing liquid, because the cured resin does not dissolve in and the uncured resin does dissolve in the removing liquid, which can dissolve the resin contained in the curing liquid.

The removing liquid contains a second organic solvent. Examples of the second organic solvent include: ketones such as acetone and ethyl methyl ketone; esters such as ethyl acetate and butyl acetate; ethers such as ethyl methyl ether, diethylene glycol dimethyl ether, triethylene glycol dimethyl ether, and THF; aliphatic hydrocarbons such as hexane and octane; and aromatic hydrocarbons such as toluene and xylene.

The drying step is a step of drying a cured product (three-dimensional object) obtained in the cured product forming step. In the drying step, not only may the water contained in the cured product be removed, but also any organic material contained in the cured product may be removed (degreased). Examples of the drying unit include known dryers and thermohygrostat baths.

The degreasing step is a step of degreasing the cured product (three-dimensional object) formed in the cured product forming step. The degreasing step can evaporate organic ingredients from the cured product to promote progression of sintering. Examples of the degreasing unit include known sintering furnaces and electric furnaces.

The sintering step is a step of sintering the cured product (three-dimensional object) formed in the cured product forming step. The sintering step can form the cured product into a compacted or integrated molded product of at least

one of metals and ceramics (a sintered body of the three-dimensional object). Examples of the sintering unit include known sintering furnaces. The degreasing unit and the sintering unit may be an integrated unit.

The surface protection treatment step is a step of, for example, forming a protective layer on the cured product (three-dimensional object) formed in the cured product forming step. The surface protection treatment step can provide the surface of the cured product (three-dimensional object) with, for example, enough durability to use the cured product (three-dimensional object) as is, for example. Specific examples of the protective layer include a waterproof layer, a weatherproof layer, a lightfastness layer, a heat insulating layer, and a lustering layer. Examples of the surface protection treatment unit include known surface protection treatment apparatuses such as a spraying device and a coating device.

The painting step is a step of painting the cured product (three-dimensional object) formed in the cured product forming step. The painting step can color the cured product (three-dimensional object) with a desired color. Examples of the painting unit include known painting devices such as those using, for example, a spray, a roller, or a brush.

A mass of the resin contained in the cured product after the sintering step is 5% by mass or less of a mass of the resin contained in the cured product before the sintering step.

A fraction of the mass of the resin contained in the cured product after the sintering step relative to the mass of the resin contained in the cured product before the sintering step (a rate of the residual resin) is obtained in the following manner. Specifically, the weight of the three-dimensional object before sintering and the weight of the three-dimensional object after sintering are measured. The difference therebetween is determined as the weight of the resin that is evaporated in the sintering step. This weight is divided by the weight of the resin contained in the three-dimensional object before sintering.

A flow of object formation in the three-dimensional object producing method of the present embodiment will be described with reference to FIG. 2A to FIG. 2E. FIG. 2A to FIG. 2E are schematic explanatory views that are used for describing the flow of object formation. This description starts with the state where the first object-forming layer (cured product) 30 is formed on an object-forming stage of an object-forming tank. When forming the next object-forming layer on the first object-forming layer 30, as illustrated in FIG. 2A, a supply stage 23 of a supplying tank is moved up and an object-forming stage 24 of an object-forming tank is moved down. The distance over which the object-forming stage 24 is moved down is set so that a gap (stacking pitch) of $\Delta t1$ is present between the top of the surface (powder face) of the powder layer in the object-forming tank 22 and the bottom (lower tangential portion) of a smoothing roller 12. The gap $\Delta t1$ is not particularly limited but is preferably several tens micrometers to one hundred micrometers.

In the present embodiment, the smoothing roller 12 is disposed so as to have a gap with respect to the top ends of the supplying tank 21 and the object-forming tank 22. When powder 20 is transferred to the object-forming tank 22 and smoothed, the surface (powder face) of the powder layer comes to be at a higher position than the top ends of the supplying tank 21 and the object-forming tank 22.

This makes sure to prevent contact of the smoothing roller 12 with the top ends of the supplying tank 21 and the object-forming tank 22, reducing damage of the smoothing roller 12. When the surface of the smoothing roller 12 is damaged, streaks occur on the surface of a powder layer 31 supplied to the object-forming tank 22 (see FIG. 2D) to easily decrease in smoothness.

Then, as illustrated in FIG. 2B, the powder 20, which is disposed at a higher position than the top end of the supplying tank 21, is moved to the side of the object-forming tank 22 while the smoothing roller 12 is being rotated in the arrow direction, to transfer the powder 20 to the object-forming tank 22 (supply of the powder).

As illustrated in FIG. 2C, the smoothing roller 12 is moved in parallel to the stage face of the object-forming stage 24 of the object-forming tank 22, to form a powder layer 31 having a predetermined thickness of At1 in the object-forming tank 22 of the object-forming stage 24 (smoothing). Excess powder 20, which is not used for forming the powder layer 31, falls into an excess powder-receiving tank 29.

After the formation of the powder layer 31, the smoothing roller 12 is, as illustrated in FIG. 2D, moved to the side of the supplying tank 21 and moved back (returned) to the initial position (original position).

The smoothing roller 12 is configured to move while maintaining a constant distance from the top ends of the object-forming tank 22 and the supplying tank 21. When the smoothing roller 12 can move with a constant distance maintained therefrom, the smoothing roller 12 transfers the powder 20 to the object-forming tank 22 and can form the powder layer 31 having a uniform thickness h (corresponding to the stacking pitch $\Delta t1$) to the object-forming tank 22 or onto the previously formed object-forming layer 30.

Although the following description may be given without distinguishing the thickness h of the powder layer 31 from the stacking pitch $\Delta t1$, these are the same thickness and have the same meaning, unless otherwise stated. The thickness h of the powder layer 31 may be actually measured, and in this case, it is preferably an average value obtained from thicknesses at two or more locations.

After that, as illustrated in FIG. 2E, liquid droplets 10 of the curing liquid (object-forming liquid) are discharged from a head 52 of a liquid discharge unit 50, to form the object-forming layer 30 having a desired shape in the next powder layer 31 (object formation).

The object-forming layer 30 is, for example, formed through reaction between the powder 20 and the liquid

droplets 10 of the curing liquid discharged from the head 52, such that particles of the powder 20 form covalent bonds between themselves via the curing agent contained in the curing liquid to form the cured product.

Next, a new object-forming layer 30 is formed by repeating the above-described powder layer forming step and discharging step. The new object-forming layer 30 is integrated with the underlying object-forming layer 30 to form part of an object (which may also be referred to as, for example, a three-dimensional shaped object or a three-dimensional object). The powder layer forming step and the discharging step are repeated to complete formation of the object.

By the above three-dimensional object producing method of the present invention, it is possible to simply and efficiently produce a three-dimensional object having a complex stereoscopic (three-dimensional (3D)) shape with a good dimensional accuracy, using the powder material for three-dimensional object formation or the kit for three-dimensional object formation without disintegration before, for example, sintering.

The thus-obtained three-dimensional object and sintered body thereof have an enough strength and an excellent dimensional accuracy, and can realize fine protrusions and recesses, curves, etc. Thus, they also have an excellent aesthetic appearance and is high quality, and can be suitably used for various applications.

(Curing liquid for three-dimensional object formation)

A curing liquid for three-dimensional object formation of the present invention includes a curing agent, where the curing agent contains an aliphatic compound having two or more isocyanate groups at a molecular terminal thereof; and if necessary, further includes other ingredients.

A curing liquid for three-dimensional object formation of the present invention is the same as the curing liquid described for the three-dimensional object producing method and apparatus.

The curing liquid for three-dimensional object formation of the present invention is a curing liquid for three-dimensional object formation used together with the powder material for three-dimensional object formation, where the powder material includes a base material and a resin including a reactive functional group. The curing agent is capable of forming a covalent bond with the reactive functional group.

The curing liquid for three-dimensional object formation of the present invention can be used together with the powder material for three-dimensional object formation, where the powder material includes a base material and a resin including a reactive functional group, for production of various molded products and structures. The curing liquid for three-dimensional object formation can be particularly suitably used for the above-described three-dimensional object producing method of the present invention, the three-dimensional object producing apparatus, and the three-dimensional object obtained in the present invention.

The curing liquid for three-dimensional object formation of the present invention has excellent discharge stability. The curing liquid for three-dimensional object formation of the present invention contains a small amount of a residual solvent after dried. Thus, when the curing liquid for three-dimensional object formation is used together with the powder material for three-dimensional object formation to produce a three-dimensional object (sintering precursor), it is possible to prevent curing of the powder material for three-dimensional object formation except the object-forming portion, and thus improve removability of the excess powder material by air blow.

(Kit for three-dimensional object formation)

A kit for three-dimensional object formation includes: a powder material for three-dimensional object formation, where the powder material includes a base material and a resin including a reactive functional group; and a curing agent capable of forming a covalent bond with the reactive functional group, where the curing agent contains an aliphatic compound having two or more isocyanate groups at a molecular terminal thereof. If necessary, the kit for three-dimensional object formation further includes other ingredients.

A kit for three-dimensional object formation includes: the powder material for three-dimensional object formation used for the three-dimensional object producing method of the present invention; and the curing liquid. If necessary, the kit for three-dimensional object formation further includes other ingredients.

In the kit for three-dimensional object formation, the curing agent may be contained in the form of solid rather than in the curing liquid, and in use, may be mixed with a solvent to prepare the curing liquid.

The powder material for three-dimensional object formation and the curing liquid in the kit for three-dimensional object formation are the same as those described for the three-dimensional object producing method of the present invention.

The kit for three-dimensional object formation can be suitably used for production of various molded products and structures. The kit for three-dimensional object formation can be particularly suitably used for the above-described three-dimensional object producing method of the present invention, the three-dimensional object producing apparatus, and the three-dimensional object obtained in the present invention.

When the kit for three-dimensional object formation is used to produce a structure, only by allowing the curing

liquid to act on the powder material for three-dimensional object formation, optionally followed by drying, is it possible to simply and efficiently produce a structure having a complex three-dimensional shape with a good dimensional accuracy. The thus-obtained structure is a cured product (three-dimensional object) having sufficient hardness. This structure does not disintegrate even if held in hand, put in and out the mold, and subjected to air blow to remove the excess powder material for three-dimensional object formation. Thus, it has excellent operability and handling property. The cured product may be used as is, or may be used as a cured product for sintering, which is further subjected to a sintering treatment to obtain a molded product (sintered body of the three-dimensional object). The sintering treatment does not form, for example, unnecessary pores in the molded product after sintering and can easily produce a molded product having an aesthetic appearance.

<Three-dimensional object>

A three-dimensional object obtained in the present invention is either a cured product obtained by applying the curing liquid (the curing liquid for three-dimensional object formation) to the powder material for three-dimensional object formation or a cured product obtained using the kit for three-dimensional object formation by applying the curing liquid (the curing liquid for three-dimensional object formation) to the powder material for three-dimensional object formation in the kit for three-dimensional object formation, where the cured product is a cured product for sintering, which is to be sintered to obtain a molded product (sintered body of the three-dimensional object).

The three-dimensional object is obtained only by applying the curing liquid to the powder material for three-dimensional object formation, but has sufficient strength. In the three-dimensional object, the base material exists densely (at a high filling rate) and a very small amount of the resin exists around attached particles of the base material. When the three-dimensional object is, for example, sintered later to form a molded product (sintered body), a volatile (degreased) amount of organic ingredients can be reduced unlike in the conventional cured product of at least one of powder and particles using, for example, an adhesive. The obtained molded product (sintered body) is free of, for example, unnecessary pores (traces of degreasing) and has an aesthetic appearance.

The strength of the three-dimensional object is, for example, such a degree that disintegration or other disadvantageous phenomena do not occur even if the surface thereof is rubbed. Specifically, it is such a degree that cracks or other failures do not occur even if the surface thereof is subjected to an air blow treatment 5 cm apart using an air gun having a nozzle caliber of 2 mm and an air pressure of 0.3 MPa.

Examples

The present invention will be described below by way of Examples. The present invention should not be construed as being limited to these Examples.

-Preparation of powder material 1 for three-dimensional object formation-

--Preparation of coating liquid 1--

As presented in Table 1, 114 parts by mass of acetone was mixed with 6 parts by mass of acrylic polyol (obtained from TOEI KASEI CO., LTD., TZ#9515) as the resin ("No. 1-1" in Table 1). While heated to 50°C in a water bath, the mixture was stirred for 1 hour with THREE-ONE MOTOR (obtained from Shinto Scientific Co., Ltd., BL600) to dissolve the acrylic polyol in the organic solvent, to prepare 120 parts by mass of a 5% by mass acrylic polyol solution. The thus-obtained liquid preparation was referred to as coating liquid 1.

A viscosity at 25°C of the 5% by mass (w/w%) solution of the acrylic polyol was measured with a viscometer (rotary viscometer obtained from BROOKFIELD, Co., DV-E VISCOMETER HADVE115 model). The viscosity measured was from 5.0 mPa·s through 6.0 mPa·s.

--Coating of coating liquid 1 on the surface of the base material--

Next, a commercially available coating device (obtained from Powrec Co., MP-01) was used to coat the coating liquid 1 on 100 parts by mass of AlSi10Mg powder (obtained from Toyo Aluminium K.K., Si10Mg-30BB, volume average particle diameter: 35 μm) as the base material ("No. 1-1" in Table 1) so as to have a coating thickness (average thickness) of 200 nm, to obtain a powder material 1 for three-dimensional object formation.

In this coating, sampling was regularly performed in the course to appropriately adjust the coating time and intervals so that the coating thickness (average thickness) of the coating liquid 1 would be 200 nm and the surface covering ratio (%) would be 80%. Through the above procedure, the powder material 1 for three-dimensional object formation was obtained. The following gives measuring methods for the coating thickness and the surface covering ratio,

and coating conditions.

<Coating thickness (average thickness)>

The coating thickness (average thickness) was determined in the following manner. Specifically, the surface of the powder material 1 for three-dimensional object formation was polished with emery paper, and then was lightly polished with cloth impregnated with water to dissolve the coated resin, to prepare a sample for observation. Next, under a field emission scanning electron microscope (FE-SEM), the boundary portion between the base material portion and the coated resin, exposed to the surface, was observed, and the boundary site was measured as the coating thickness. This measurement was performed at 10 locations, and an average of the measurements was used as the coating thickness (average thickness).

<Surface covering ratio>

Using a field emission scanning electron microscope (FE-SEM), in which a field of view was set so that 10 particles of the powder material 1 for three-dimensional object formation would be included in a screen, a backscatter electron image (ESB) was captured under the following conditions and binarized through image processing with Imaged software. With black portions being coated portions and white portions being base material portions, a ratio of area of the black portions/(area of the black portions + area of the white portions) × 100 was calculated for one particle. Ten particles were measured and an average of the measurements was used as a surface covering ratio (%).

-SEM observation conditions-

•Signal: ESB (backscatter electron image)
•EHT: 0.80 kV
•ESB Grid: 700 V
•WD: 3.0 mm
•Aperture Size: 30.00 μm
•Contrast: 80%
•Magnitude: set for each sample so that 10 particles would be included in the transverse direction of a screen

<Coating conditions>

- Spray settings

  Nozzle model: 970
  Nozzle caliber: 1.2 mm
  Coating liquid discharge pressure: 4.7 Pa·s
  Coating liquid discharge velocity: 3 g/min
  Amount of air atomized: 50 NL/min

- Rotor settings

  Rotor model: M-1
  Rotation speed: 60 rpm
  Rotation number: 400%

- Gas flow settings

  Gas feeding temperature: 80°C
  Gas feeding air amount: 0.8 $m^3$/min
  Bag filter cleaning pressure: 0.2 MPa
  Bag filter cleaning duration: 0.3 seconds
  Bag filter intervals: 5 seconds

- Coating period
  40 minutes

The obtained powder material 1 for three-dimensional object formation was measured for volume average particle diameter using a commercially available particle size measuring device (obtained from Nikkiso Co., Ltd., MICROTRAC HRA). The volume average particle diameter measured was found to be 35 μm.

-Preparation of curing liquid 1-

Diethyl succinate (obtained from FUJIFILM Wako Pure Chemical Corporation) was mixed with the curing agent, polyisocyanate (obtained from Mitsui Chemicals, Inc., aliphatic polyisocyanate) formed of hexamethylene diisocyanate so that the total amount including the curing agent would be 100 parts by weight and the curing agent would be 15% by mass of the total amount of a curing liquid. The resultant was dispersed with HOMOMIXER for 30 minutes to prepare curing liquid 1 ("No. 1-1" in Table 1).

(Example 1)

The obtained powder material 1 for three-dimensional object formation and the curing liquid 1 were used to produce three-dimensional object 1 in the following manner by a shape printing pattern having a size of 70 mm in length × 12 mm in width.

1) First, using a known powder additive manufacturing apparatus as illustrated in FIG. 2A to FIG. 2E, the powder material 1 for three-dimensional object formation was transferred from a supply-side powder reserve tank to an object-forming-side powder reserve tank to form a thin layer of the powder material 1 on a support. The thin layer had an average thickness of 100 μm.
2) Next, the curing liquid 1 was applied (discharged) to the formed thin layer of the powder material 1 from nozzles of a known inkjet discharge head, to dissolve the acrylic polyol in diethyl succinate contained in the curing liquid 1. The acrylic polyol was crosslinked by the action of the curing agent (aliphatic polyisocyanate) contained in the curing liquid 1.
3) Next, the above step 1) and the above step 2) were repeated until the predetermined total average thickness of 3 mm. The cured thin layer of the powder material 1 was sequentially stacked, followed by using a dryer to perform a drying step at 50°C for 4 hours and then at 100°C for 10 hours, to obtain three-dimensional object 1.

The three-dimensional object 1 after drying was subjected to air blow to remove excess powder material 1. The three-dimensional object 1 did not disintegrate and was excellent in strength and dimensional accuracy.
In the present Examples, "unit volume during object formation" was set as follows from the set conditions of the powder additive manufacturing apparatus (three-dimensional object producing apparatus).

- Resolution in object formation: 300 dpi (about 84.6 μm)
- Average thickness corresponding to one layer of the powder material layer: 84 μm
- Unit volume during object formation=$(84.6\ \mu m)^2 \times 84\ \mu m$=602 pL

The "amount by mole of the hydroxyl group ($N_{[OH]}$) contained in the powder material 1 per unit volume during object formation" was determined based on the following formula using an amount of the powder material contained in a region represented by the unit volume and an amount of the hydroxyl group contained in the powder material.
$N_{[OH]}$={(amount [g] of a powder material for three-dimensional object formation contained in a region represented by a unit volume)×(resin coating amount [% by mass])/100}×(hydroxyl value of a resin [mg/g KOH])/(molar mass of KOH: 56.1 [g/mol])
Here, the "amount [g] of a powder material for three-dimensional object formation contained in a region represented by a unit volume" and the "resin coating amount [% by mass]" were determined as follows. The "hydroxyl value of a resin [mg/g KOH]" was measured according to "JIS K 1557-1 Part 1: Determination of hydroxyl value".

·Amount [g] of a powder material for three-dimensional object formation contained in a region represented by a unit volume=a volume occupancy rate of the powder material for three-dimensional object formation (determined as 50%)×(unit volume)×(powder true density (true density of a core material composition))

·Resin coating amount [% by mass]=Weight loss ratio of the powder material for three-dimensional object formation by TG-DTA

Here, the "weight loss ratio of the powder material for three-dimensional object formation by TG-DTA" was measured under the following conditions. The weight loss ratio was calculated using a difference between the weight of a powder material for three-dimensional object formation after the powder material was held at 550°C for 3 hours and the weight of the powder material at the beginning of the measurement. The measurement was performed three times, and an average value of the weight loss ratios obtained was defined as a resin coating amount [% by mass).

<Conditions>

•Amount of measurement sample: 10 g
•Measurement starting temperature: 25°C
•Temperature rise: 10°C/min
•Maintaining temperature: 550°C
•Maintaining time: 3 hours
•Measurement atmosphere: nitrogen
•Flow rate of gas of measurement atmosphere: 200 mL/min The values determined from the above were as follows.
•Amount [g] of a powder material for three-dimensional object formation contained in a region represented by a unit volume: $8.06\times10^{-10}$
•Resin coating amount [% by mass]: 3.0
•Hydroxyl value of a resin [mg/g KOH]: 180
•$N_{[OH]}$: $8.7\times10^{-11}$

The "amount by mole of $N_{[NCO]}$ of the isocyanate group contained in the curing liquid applied per unit volume during object formation" was calculated as follows. Note that, the curing liquid applied per unit volume during object formation was applied as a liquid droplet, the volume of one liquid droplet was used.
First, according to JIS K 1603, the content A of the isocyanate groups contained in the curing liquid is determined.
The mass B (g) of the curing liquid applied per unit volume during object formation is determined using the volume of the curing liquid applied per unit volume during object formation and the specific gravity (density) of the curing liquid.
The amount by mole of $N_{[NCO]}$ of the isocyanate groups contained in the curing liquid applied per unit volume during object formation was obtained from the content A of isocyanate groups (% by mass), the mass B (g) of the curing liquid, and the molecular weight (42) of the isocyanate group.
The conditions of the curing liquid 1 are as follows.

•The volume of a liquid droplet: 35 pL
•Specific gravity (density) of curing liquid 1: 1.04 g/mL

$N_{[NCO]}/N_{[OH]}$ was calculated from the calculated $N_{[OH]}$ and $N_{[NCO]}$. The results are presented in Table 1.
Next, "shape retention (after immersion in removing liquid)", "rate of residual resin (%)", and "storage stability of curing liquid" were evaluated according to the following criteria. The results are presented in Table 2.

<Shape retention (after immersion in removing liquid)>

In the above step 3), instead of subjecting the three-dimensional object after drying to air blow to remove the excess powder material therefrom, the three-dimensional object after drying was immersed in a removing liquid (triethylene glycol dimethyl ether) of 20°C for 60 minutes, and then the shape of the three-dimensional object was evaluated according to the following criteria.

[Evaluation criteria]

A: The three-dimensional object can retain its shape and has a strength that is 75% or higher of the strength before immersed in the removing liquid (triethylene glycol dimethyl ether).
B: The three-dimensional object can retain its shape and has a strength that is less than 75% but 50% or higher of the strength before immersed in the removing liquid (triethylene glycol dimethyl ether).
C: The three-dimensional object can retain its shape, but is easily bent by external forces such as its own weight and may cause warpage.
D: The three-dimensional object cannot retain its shape to disintegrate after immersed in the removing liquid (triethylene glycol dimethyl ether).

<Rate of residual resin (%)>

The three-dimensional object obtained in the above 3) was heated to 450°C for 1 hour using a degreasing furnace in a vacuum atmosphere and then was maintained at 450°C for 9 hours to perform a degreasing step. After that, the resultant was heated to 520°C for 0.2 hours and maintained for 0.5 hours to perform a sintering step. As a result, a compacted three-dimensional object (sintered body) having a relative density of 90% or higher was obtained. Regarding the rate (%) of the residual resin expected to inhibit sintering, the weight of the three-dimensional object before sintering and the weight of the three-dimensional object after sintering were measured. The difference therebetween was determined as the weight of the resin that had been evaporated in the sintering step and was divided by the weight of the resin contained in the three-dimensional object before sintering. The obtained value was evaluated according to the following criteria.

[Evaluation criteria]

A: The rate of the residual resin contained in the sintered body was 2% or less relative to 100% before sintering.
B: The rate of the residual resin contained in the sintered body was more than 2% but 5% or less relative to 100% before sintering.
C: The rate of the residual resin contained in the sintered body was more than 5% but 10% or less relative to 100% before sintering.
D: The rate of the residual resin contained in the sintered body was more than 10% but 30% or less relative to 100% before sintering.

<Storage stability of curing liquid>

200 mL of the prepared curing liquid was placed in a 500 mL poly ointment bottle. The bottle was covered with a lid having a hole 3 mm in diameter and left to stand for 5 days at 25°C and 45 RH%. Before and after being left to stand, the curing liquid was measured for viscosity and isocyanate group content, and "viscosity increasing rate" and "NCO group changing rate" were calculated by the following methods.

<<Viscosity measurement>>

1.1 mL of the curing liquid before and after being left to stand was taken with a micropipette, and was measured for viscosity using viscometer TVE-25L obtained from TOKI SANGYO CO., LTD. The viscosity increasing rate was calculated from viscosity A denoting the measured viscosity of the curing liquid before being left to stand and viscosity B denoting the measured viscosity of the curing liquid after being left to stand.

The viscosity increasing rate was calculated from the following expression:

$$([\text{viscosity B after being left to stand}]/[\text{viscosity A before being left to stand}]-1)\times 100\ (\%).$$

The calculated viscosity increasing rate was evaluated according to the following evaluation criteria.

[Evaluation criteria]

A: The viscosity increasing rate was less than 3%.
B: The viscosity increasing rate was 3% or more but less than 5%.
C: The viscosity increasing rate was 5% or more.

<<Measurement of NCO group content rate>>

According to JIS K 1603, the rate of change in the NCO (isocyanate) group content (% by mass) of the curing liquid between before and after being left to stand was calculated from the following formula: (1-[after being left to stand]/[before being left to stand])×100 (%). The calculated rate of change in the NCO group content was evaluated according to the following evaluation criteria.

[Evaluation criteria]

B: The rate of change in the NCO group content was less than 10%.
C: The rate of change in the NCO group content was 10% or more.

(Examples 2 to 31 and Comparative Examples 1 to 8)

In the same manner as in Example 1 except that the formulations of the powder material for three-dimensional object formation and the curing liquid were changed as described in Tables 1-1 to 1-3, three-dimensional objects 2 to 39 were produced and evaluated. The results are presented in Tables 1-1 to 1-3 and Table 2. The surface covering ratio and the specific gravity of the curing liquid in Examples 2 to 31 and Comparative Examples 1 to 8 are the same as those in Example 1.

Table 1-1

| | | Powder material for three-dimensional object formation | | | | | | Curing liquid | | | $N_{[NCO]}/N_{[OH]}$ |
|---|---|---|---|---|---|---|---|---|---|---|---|
| | | Base material | | Resin | | Hydroxyl value (mg/gKOH) | $N_{[OH]}$ (mol) | No. | Curing agent | $N_{[NCO]}$ (mol) | |
| | | No. | Kind | No. | Kind | | | | | | |
| Ex. | 1 | 1-1 | AlSi10Mg | 1-1 | Acrylic polyol | 180 | 8.7E-11 | 1-1 | Polyisocyanate (Aliphatic [1]) | 8.7E-11 | 1.0 |
| | 2 | 1-1 | AlSi10Mg | 1-1 | Acrylic polyol | 180 | 8.7E-11 | 1-6 | Polyisocyanate (Aliphatic [1]) | 7.2E-12 | 0.08 |
| | 3 | 1-1 | AlSi10Mg | 1-1 | Acrylic polyol | 180 | 8.7E-11 | 1-5 | Polyisocyanate (Aliphatic [1]) | 8.7E-12 | 0.1 |
| | 4 | 1-1 | AlSi10Mg | 1-1 | Acrylic polyol | 180 | 8.7E-11 | 1-4 | Polyisocyanate (Aliphatic [1]) | 1.3E-11 | 0.15 |
| | 5 | 1-1 | AlSi10Mg | 1-1 | Acrylic polyol | 180 | 8.7E-11 | 1-3 | Polyisocyanate (Aliphatic [1]) | 1.7E-11 | 0.2 |
| | 6 | 1-1 | AlSi10Mg | 1-2 | Acrylic polyol | 180 | 8.7E-11 | 1-2 | Polyisocyanate (Aliphatic [1]) | 2.6E-11 | 0.3 |
| | 7 | 1-1 | AlSi10Mg | 2-1 | Polyvinyl butyral | 630 | 2.6E-10 | 1-2 | Polyisocyanate (Aliphatic [1]) | 2.6E-11 | 0.1 |
| | 8 | 1-1 | AlSi10Mg | 2-1 | Polyvinyl butyral | 630 | 2.6E-10 | 1-7 | Polyisocyanate (Aliphatic [1]) | 7.8E-11 | 0.3 |
| | 9 | 1-2 | AlSi10Mg (Large particle diameter) | 1-1 | Acrylic polyol | 180 | 8.7E-11 | 1-2 | Polyisocyanate (Aliphatic [1]) | 2.6E-11 | 0.3 |
| | 10 | 2-1 | Al | 1-1 | Acrylic polyol | 180 | 8.7E-11 | 1-2 | Polyisocyanate (Aliphatic [1]) | 2.6E-11 | 0.3 |
| | 11 | 3-1 | AlSi7 | 1-1 | Acrylic polyol | 180 | 8.7E-11 | 1-2 | Polyisocyanate (Aliphatic [1]) | 2.6E-11 | 0.3 |
| | 12 | 4-1 | AlSi3Mg | 1-1 | Acrylic polyol | 180 | 8.7E-11 | 1-2 | Polyisocyanate (Aliphatic [1]) | 2.6E-11 | 0.3 |
| | 13 | 5-1 | SUS316L | 1-1 | Acrylic polyol | 180 | 8.7E-11 | 1-2 | Polyisocyanate (Aliphatic [1]) | 2.6E-11 | 0.3 |
| | 14 | 6-1 | SUS630 | 1-1 | Acrylic polyol | 180 | 8.7E-11 | 1-2 | Polyisocyanate (Aliphatic [1]) | 2.6E-11 | 0.3 |

Table 1-2

| | | Powder material for three-dimensional object formation | | | | | | Curing liquid | | | $N_{[NCO]}/N_{[OH]}$ |
|---|---|---|---|---|---|---|---|---|---|---|---|
| | | Base material | | Resin | | Hydroxyl value (mg/gKOH) | $N_{[OH]}$ (mol) | No. | Curing agent | $N_{[NCO]}$ (mol) | |
| | | No. | Kind | No. | Kind | | | | | | |
| Ex. | 15 | 7-1 | Ti | 1-1 | Acrylic polyol | 180 | 8.7E-11 | 1-2 | Polyisocyanate (Aliphatic [1]) | 2.6E-11 | 0.3 |
| | 16 | 8-1 | Ti6Al4V | 1-1 | Acrylic polyol | 180 | 8.7E-11 | 1-2 | Polyisocyanate (Aliphatic [1]) | 2.6E-11 | 0.3 |
| | 17 | 9-1 | Cu | 1-1 | Acrylic polyol | 180 | 8.7E-11 | 1-2 | Polyisocyanate (Aliphatic [1]) | 2.6E-11 | 0.3 |
| | 18 | 1-1 | AlSi10Mg | 1-1 | Acrylic polyol | 180 | 8.7E-11 | 2-1 | Polyisocyanate (Aliphatic [2]) | 2.6E-11 | 0.3 |
| | 19 | 1-1 | AlSi10Mg | 1-1 | Acrylic polyol | 180 | 8.7E-11 | 3-1 | Diisocyanate (Aliphatic [1]) | 2.6E-11 | 0.3 |
| | 20 | 1-1 | AlSi10Mg | 1-1 | Acrylic polyol | 180 | 8.7E-11 | 4-1 | Diisocyanate (Aliphatic [2]) | 2.6E-11 | 0.3 |
| | 21 | 1-1 | AlSi10Mg | 1-1-1 | Acrylic polyol (Molecular weight: 50,000) | 180 | 8.7E-11 | 1-2 | Polyisocyanate (Aliphatic [1]) | 2.6E-11 | 0.3 |
| | 22 | 1-1 | AlSi10Mg | 1-1-2 | Acrylic polyol (Molecular weight: 50,000) | 300 | 8.7E-11 | 1-2 | Polyisocyanate (Aliphatic [1]) | 2.6E-11 | 0.3 |
| | 23 | 1-1 | AlSi10Mg | 1-1-3 | Acrylic polyol (Molecular weight: 50,000) | 100 | 8.7E-11 | 1-2 | Polyisocyanate (Aliphatic [1]) | 2.6E-11 | 0.3 |
| | 24 | 1-1 | AlSi10Mg | 1-1-4 | Acrylic polyol (Molecular weight: 50,000) | 50 | 8.7E-11 | 1-2 | Polyisocyanate (Aliphatic [1]) | 2.6E-11 | 0.3 |
| | 25 | 1-1 | AlSi10Mg | 1-1-5 | Acrylic polyol (Molecular weight: 50,000) | 30 | 8.7E-11 | 1-2 | Polyisocyanate (Aliphatic [1]) | 2.6E-11 | 0.3 |
| | 26 | 1-1 | AlSi10Mg | 1-1-6 | Acrylic polyol (Molecular weight: 50,000) | 25 | 8.7E-11 | 1-2 | Polyisocyanate (Aliphatic [1]) | 2.6E-11 | 0.3 |

Table 1-3

| | | Powder material for three-dimensional object formation | | | | | | Curing liquid | | | $N_{[NCO]}/N_{[OH]}$ |
|---|---|---|---|---|---|---|---|---|---|---|---|
| | | Base material | | Resin | | Hydroxyl value (mg/gKOH) | $N_{[OH]}$ (mol) | No. | Curing agent | $N_{[NCO]}$ (mol) | |
| | | No. | Kind | No. | Kind | | | | | | |
| Ex. | 27 | 1-1 | AlSi10Mg | 7-1 | Acrylic polyol (Molecular weight: 50,000) | 180 | 8.7E-11 | 1-2 | Polyisocyanate (Aliphatic [1]) | 2.6E-11 | 0.3 |
| | 28 | 1-1 | AlSi10Mg | 8-1 | Acrylic polyol (Molecular weight: 100,000) | 180 | 8.7E-11 | 1-2 | Polyisocyanate (Aliphatic [1]) | 2.6E-11 | 0.3 |
| | 29 | 1-1 | AlSi10Mg | 9-1 | Acrylic polyol (Molecular weight: 150,000) | 180 | 8.7E-11 | 1-2 | Polyisocyanate (Aliphatic [1]) | 2.6E-11 | 0.3 |
| | 30 | 1-1 | AlSi10Mg | 10-1 | Acrylic polyol (Molecular weight: 170,000) | 180 | 8.7E-11 | 1-2 | Polyisocyanate (Aliphatic [1]) | 2.6E-11 | 0.3 |
| | 31 | 1-1 | AlSi10Mg | 1-1 | Acrylic polyol | 180 | 8.7E-11 | 12-1 | Polyisocyanate (Alicyclic) | 2.6E-11 | 0.3 |

Table 2

| | | Powder material for three-dimensional object formation | | | | | | Curing liquid | | | $N_{[NCO]}/N_{[OH]}$ |
|---|---|---|---|---|---|---|---|---|---|---|---|
| | | Base material | | Resin | | Hydroxyl value (mg/gKOH) | $N_{[OH]}$ (mol) | No. | Curing agent | $N_{[NCO]}$ (mol) | |
| | | No. | Kind | No. | Kind | | | | | | |
| Comp. Ex. | 1 | 11 | AlSi10Mg | 11 | Acrylic polyol | 180 | 8.7E-11 | 0 | None | 0 | 0 |
| | 2 | 5-1 | SUS316L | 11-1 | Polyvinyl alcohol | 180 | 8.7E-11 | 5-1 | Organometallic complex | n/a | 0.3 |
| | 3 | 1-1 | AlSi10Mg | 1-1 | Acrylic polyol | 180 | 8.7E-11 | 6-1 | Epoxy resin (Bisphenol A) | n/a | 1 |
| | 4 | 1-1 | AlSi10Mg | 1-1 | Acrylic polyol | 180 | 8.7E-11 | 7-1 | Epoxy resin (Bisphenol F) | n/a | 1 |
| | 5 | 1-1 | AlSi10Mg | 1-1 | Acrylic polyol | 180 | 8.7E-11 | 8-1 | Epoxy resin (Rubber modified) | n/a | 1 |
| | 6 | 1-1 | AlSi10Mg | 1-1 | Acrylic polyol | 180 | 8.7E-11 | 9-1 | Epoxy resin (Chelate modified) | n/a | 1 |
| | 7 | 1-1 | AlSi10Mg | 1-1 | Acrylic polyol | 180 | 8.7E-11 | 10-1 | Monoisocyanate (Aliphatic [1]) | 2.6E-11 | 1 |
| | 8 | 1-1 | AlSi10Mg | 1-1 | Acrylic polyol | 180 | 8.7E-11 | 11-1 | Polyisocyanate (Aromatic [1]) | 2.6E-11 | 0.3 |

Table 3

| | | Evaluation results | | | |
|---|---|---|---|---|---|
| | | Shape retention (after immersion in removing liquid) | Rate of residual resin (%) | Storage stability of curing liquid | |
| | | | | Viscosity increasing rate (%) | Rate of change (%) in NCO group content |
| Ex. | 1 | A | C | A | C |
| | 2 | C | A | A | A |
| | 3 | B | A | A | A |
| | 4 | B | A | A | A |
| | 5 | B | A | A | A |
| | 6 | A | A | A | B |
| | 7 | B | B | A | B |
| | 8 | A | C | A | C |
| | 9 | A | A | A | B |
| | 10 | A | A | A | B |
| | 11 | A | A | A | B |
| | 12 | A | A | A | B |
| | 13 | A | A | A | B |
| | 14 | A | A | A | B |
| | 15 | A | A | A | B |
| | 16 | A | A | A | B |
| | 17 | A | A | A | B |
| | 18 | A | B | B | B |
| | 19 | B | B | B | B |
| | 20 | A | B | A | B |
| | 21 | A | A | A | B |
| | 22 | A | A | A | B |
| | 23 | B | A | A | B |
| | 24 | C | B | A | B |
| | 25 | C | B | A | B |
| | 26 | C | C | A | B |
| | 27 | B | A | A | B |
| | 28 | B | B | A | B |
| | 29 | B | C | A | B |
| | 30 | B | C | A | B |
| | 31 | A | A | C | C |

(continued)

| | | Evaluation results | | | |
|---|---|---|---|---|---|
| | | Shape retention (after immersion in removing liquid) | Rate of residual resin (%) | Storage stability of curing liquid | |
| | | | | Viscosity increasing rate (%) | Rate of change (%) in NCO group content |
| Comp. Ex. | 1 | D | A | A | B |
| | 2 | D | B | A | B |
| | 3 | B | D | A | B |
| | 4 | B | D | A | B |
| | 5 | B | D | A | B |
| | 6 | B | D | A | B |
| | 7 | D | A | A | B |
| | 8 | A | D | C | C |

Details of the materials used in Examples 1 to 31 and Comparative Examples 1 to 8 are as follows.

-Base material-

- •AlSi10Mg: obtained from Toyo Aluminium K.K., volume average particle diameter: 35 μm
- •AlSi10Mg (large particle diameter): obtained from Toyo Aluminium K.K., volume average particle diameter: 45 μm
- •Al: obtained from Toyo Aluminium K.K., volume average particle diameter: 34 μm
- •SUS316L: obtained from Sanyo Special Steel Co., Ltd., volume average particle diameter: 12 μm
- •SUS630: obtained from Sandvik Co., volume average particle diameter: 14 μm
- •Ti: obtained from OSAKA Titanium technologies Co., Ltd., volume average particle diameter: 30 μm
- •Ti6Al4V: obtained from OSAKA Titanium technologies Co., Ltd., volume average particle diameter: 30 μm

-Resin-

- •Polyacrylic polyol (No. 1-1): obtained from TOEI KASEI CO., LTD., weight average molecular weight: 20,000 or higher but lower than 40,000
- •Polyacrylic polyol (No. 1-1-1): obtained from TOEI KASEI CO., LTD., weight average molecular weight: 50,000
- •Polyacrylic polyol (No. 1-1-1): obtained from TOEI KASEI CO., LTD., weight average molecular weight: 170,000
- •Polyacrylic polyol (No. 1-2): obtained from TOEI KASEI CO., LTD., weight average molecular weight: 40,000 or higher but lower than 70,000
- •Polyacrylic polyol (No. 1-3): obtained from TOEI KASEI CO., LTD., weight average molecular weight: 70,000 or higher but lower than 100,000
- •Polyacrylic polyol (No. 1-4): obtained from TOEI KASEI CO., LTD., weight average molecular weight: 100,000 or higher but lower than 150,000
- •Polyacrylic polyol (No. 1-5): obtained from TOEI KASEI CO., LTD., weight average molecular weight: 150,000 or higher but lower than 200,000
- •Polyvinyl butyral: obtained from SEKISUI CHEMICAL CO., LTD., weight average molecular weight: 20,000 or lower
- •Polyvinyl acetal: obtained from SEKISUI CHEMICAL CO., LTD., weight average molecular weight: 20,000 or lower
- •Polyester polyol: obtained from ADEKA Corporation
- •Ethyl cellulose: obtained from NISSIN-KASEI CO. LTD.
- •Vinyl chloride-vinyl acetate-polyvinyl alcohol (PVA) copolymer resin: obtained from Nissin Chemical Industry Co., Ltd., molecular weight: 46,000
- •Polyvinyl alcohol: obtained from JAPAN VAM & POVAL CO., LTD.

-Curing agent-

- Polyisocyanate (aliphatic [1]): obtained from Mitsui Chemicals, Inc., D160N
- Polyisocyanate (aliphatic [2]): obtained from Asahi Kasei Corp., AE700-100
- Diisocyanate (aliphatic [1]): obtained from Asahi Kasei Corp., D101
- Diisocyanate (aliphatic [2]): obtained from Asahi Kasei Corp., D201
- Polyisocyanate (aromatic): obtained from Mitsui Chemicals, Inc., D110N
- Polyisocyanate (alicyclic): obtained from Mitsui Chemicals, Inc., D120N
- Monoisocyanate (aliphatic): obtained from TOKYO CHEMICAL INDUSTRY CO., LTD., HDI
- Epoxy resin (Bisphenol A, No. 6-1): obtained from DIC Corporation
- Epoxy resin (Bisphenol F, No. 7-1): obtained from DIC Corporation
- Epoxy resin (rubber modified, No. 8-1): obtained from ADEKA Corporation
- Epoxy resin (chelate modified, No. 9-1): obtained from ADEKA Corporation
- Organometallic complex (No. 5-1): DAIISHI KIGENSO KAGAKU KOGYO CO., LTD. (product name: Zircosole series)

The aliphatic [1] is an aliphatic compound of the Formula (1) where $R_1$ is a straight chain, and the aliphatic [2] is an aliphatic compound of the Formula (2) where $R_1$ is a straight chain. The aromatic is where $R_1$ is aromatic, and the alicyclic is where $R_1$ is alicyclic.

In the present invention, it was found that expected effects were obtainable regardless of the kind of the base material.

## Claims

**1.** A three-dimensional object producing method comprising:

forming a powder material layer with a powder material for three-dimensional object formation, where the powder material includes a base material and a resin including a reactive functional group; and

applying a curing liquid to the powder material layer to form a cured product, where the curing liquid contains a curing agent capable of forming a covalent bond with the reactive functional group,

wherein the curing agent includes an aliphatic compound having two or more isocyanate groups at a molecular terminal thereof.

**2.** The three-dimensional object producing method according to claim 1,
wherein the resin is at least one selected from the group consisting of polyol and polyvinyl alcohol.

**3.** The three-dimensional object producing method according to claim 1 or 2,

wherein the reactive functional group is a hydroxyl group, and

an expression: $0.1 \leq N_{[NCO]}/N_{[OH]}$ is satisfied:

where $N_{[OH]}$ is an amount by mole of the hydroxyl group contained in the powder material per unit volume during object formation, and $N_{[NCO]}$ is an amount by mole of the isocyanate group contained in the curing liquid applied per unit volume during object formation, $N_{[OH]}$ and $N_{[NCO]}$ being determined from measurements by methods as herein described

**4.** The three-dimensional object producing method according to any one of claims 1 to 3,
wherein an amount of the curing agent relative to a total amount of the curing liquid is 5.0% by mass or more.

**5.** The three-dimensional object producing method according to any one of claims 1 to 4,
wherein a hydroxyl value, as measured according to "JIS K 1557-1 Part 1: Determination of hydroxyl value". of the resin is 30 mg KOH/g or more.

**6.** The three-dimensional object producing method according to any one of claims 1 to 5,

wherein the aliphatic compound having the two or more isocyanate groups at the molecular terminal thereof is

at least one selected from the group consisting of Formula (1) and Formula (2) below:

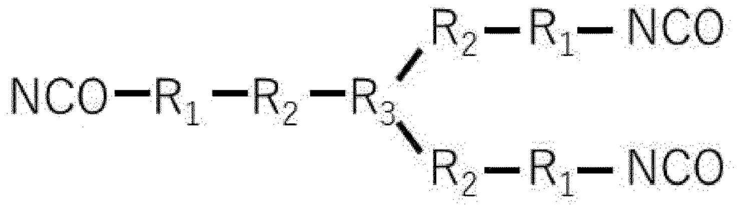

Formula (1)

where, in the Formula (1),
$R_1$ represents an aliphatic hydrocarbon group,
$R_2$ is at least one selected from the group consisting of a urethane bond, an amide bond, an ester bond, and an ether bond, and
$R_3$ is represented by at least one selected from the group consisting of Formula (1-1) to Formula (1-6) below that each may have a substituent, where, in the Formula (1-1) to the Formula (1-6), $Y^1$ represents an alkyl group, and $Y^2$ to $Y^7$ each independently represent an alkylene group,

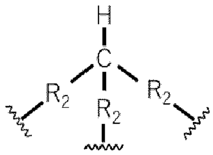

Formula (1-1)

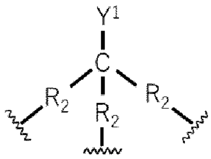

Formula (1-2)

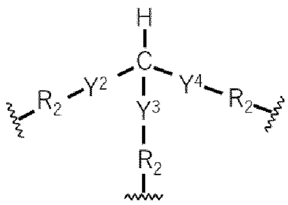

Formula (1-3)

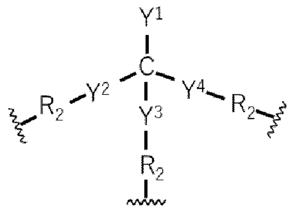

Formula (1-4)

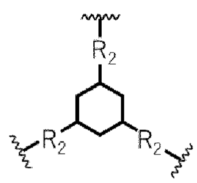

Formula (1-5)

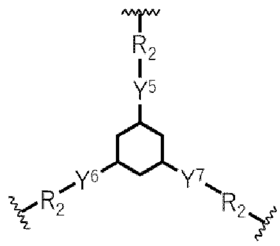

Formula (1-6)

$NCO\text{-}R_1\text{-}R_2\text{-}R_4\text{-}R_2\text{-}R_1\text{- }NCO$ Formula (2)

where, in the Formula (2),

$R_1$ represents an aliphatic hydrocarbon group,
$R_2$ is at least one selected from the group consisting of a urethane bond, an amide bond, an ester bond, and an ether bond, and
$R_4$ is an alkylene group that may have a substituent.

**7.** The three-dimensional object producing method according to claim 6,

wherein the aliphatic compound having the two or more isocyanate groups at the molecular terminal thereof is at least one selected from the group consisting of the Formula (1) and the Formula (2),
where, in the Formula (1) and the Formula (2),
the $R_1$ represents an alkylene group having 1 or more but 6 or less carbon atoms,
the $R_2$ represents a urethane bond,
the $R_3$ represents at least one selected from the group consisting of the Formula (1-2) and the Formula (1-3)

each of which may have a substituent, where $Y^1$ represents an alkyl group having 1 or more but 4 or less carbon atoms, and $Y^2$ to $Y^4$ each independently represent an alkylene group having 1 or more but 6 or less carbon atoms, and
the $R_4$ represents an alkylene group having 1 or more but 4 or less carbon atoms that may have a substituent.

**8.** The three-dimensional object producing method according to claim 7,

wherein the aliphatic compound having the two or more isocyanate groups at the molecular terminal thereof is at least one selected from the group consisting of the Formula (1) and the Formula (2),
where, in the Formula (1) and the Formula (2),
the $R_1$ represents an alkylene group having 6 carbon atoms,
the $R_2$ represents a urethane bond,
the $R_3$ represents at least one selected from the group consisting of the Formula (1-2) and the Formula (1-3), where $Y^1$ represents a methyl group, and $Y^2$ to $Y^4$ represent an alkylene group having 6 carbon atoms, and
the $R_4$ represents an alkylene group having 2 carbon atoms.

## Patentansprüche

**1.** Verfahren zum Herstellen von dreidimensionalen Objekten, Folgendes umfassend:

Bilden einer Pulvermaterialschicht mit einem Pulvermaterial zur Bildung von dreidimensionalen Objekten, worin das Pulvermaterial ein Basismaterial und ein Harz, einschließlich einer reaktiven funktionellen Gruppe, einschließt; und
Aufbringen einer Härtungsflüssigkeit auf die Pulvermaterialschicht, um ein gehärtetes Produkt zu bilden, worin die Härtungsflüssigkeit ein Härtungsmittel enthält, das eine kovalente Bindung mit der reaktiven funktionellen Gruppe bilden kann,
wobei das Härtungsmittel eine aliphatische Verbindung mit zwei oder mehr Isocyanatgruppen an einem Molekülende davon einschließt.

**2.** Verfahren zum Herstellen von dreidimensionalen Objekten nach Anspruch 1,
wobei das Harz mindestens eines ist, das aus der Gruppe bestehend aus Polyol und Polyvinylalkohol ausgewählt ist.

**3.** Verfahren zum Herstellen von dreidimensionalen Objekten nach Anspruch 1 oder 2,

wobei die reaktive funktionelle Gruppe eine Hydroxylgruppe ist, und
ein Ausdruck: $0{,}1 \leq N_{[NCO]}/N_{[OH]}$ erfüllt ist:

worin $N_{[OH]}$ eine Menge der Hydroxylgruppe in Mol, die in dem Pulvermaterial enthalten ist, pro Einheitsvolumen während der Objektbildung ist, und
$N_{[NCO]}$ eine Menge der Isocyanatgruppe in Mol, die in der aufgebrachten Härtungsflüssigkeit enthalten ist, pro Einheitsvolumen während der Objektbildung ist, wobei $N_{[OH]}$ und $N_{[NCO]}$ aus Messungen durch hierin beschriebene Verfahren bestimmt werden.

**4.** Verfahren zum Herstellen von dreidimensionalen Objekten nach einem der Ansprüche 1 bis 3,
wobei eine Menge des Härtungsmittels in Bezug auf eine Gesamtmenge der Härtungsflüssigkeit 5,0 Massen-% oder mehr beträgt.

**5.** Verfahren zur Produktion von dreidimensionalen Objekten nach einem der Ansprüche 1 bis 4,
wobei eine Hydroxylzahl, wie gemäß "JIS K 1557-1 Part 1: Determination of hydroxyl value" gemessen, des Harzes 30 mg KOH/g oder mehr beträgt.

**6.** Verfahren zum Herstellen von dreidimensionalen Objekten nach einem der Ansprüche 1 bis 5,

wobei die aliphatische Verbindung mit den zwei oder mehr Isocyanatgruppen an dem Molekülende davon mindestens eine ist, die aus der Gruppe bestehend aus Formel (1) und Formel (2) im Folgenden ausgewählt ist:

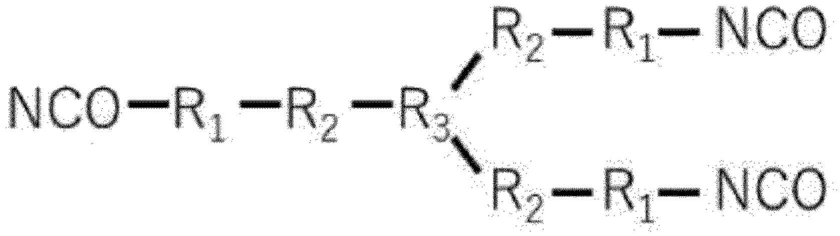
Formel (1),

worin in der Formel (1)
$R^1$ für eine aliphatische Kohlenwasserstoffgruppe steht,
$R^2$ mindestens eine ist, die aus der Gruppe bestehend aus einer Urethanbindung, einer Amidbindung, einer Esterbindung und einer Etherbindung ausgewählt ist, und
$R^3$ durch mindestens eine dargestellt ist, die aus der Gruppe bestehend aus Formel (1-1) bis Formel (1-6) im Folgenden ausgewählt ist, die jeweils einen Substituenten aufweisen können, worin in der Formel (1-1) bis zu der Formel (1-6) $Y^1$ für eine Alkylgruppe steht und $Y^2$ bis $Y^7$ jeweils unabhängig für eine Alkylengruppe stehen,

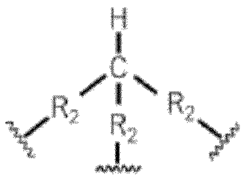
Formel (1-1)

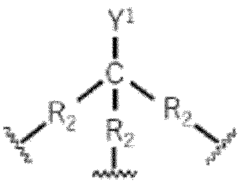
Formel (1-2)

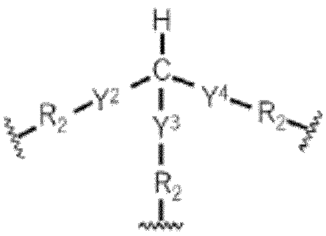
(Formel 1-3)

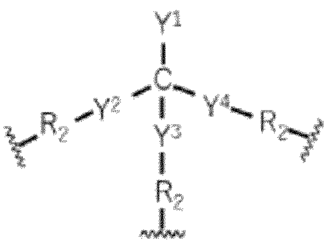
Formel (1-4)

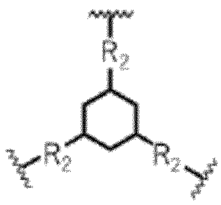
Formel (1-5)

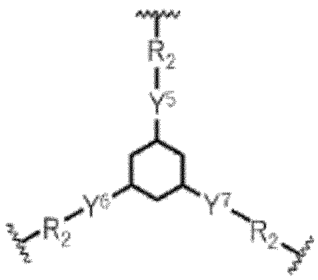
Formel (1-6),

$NCO-R_1-R_2-R_4-R_2-R_1-NCO$ Formel (2),

worin in der Formel (2)

$R^1$ für eine aliphatische Kohlenwasserstoffgruppe steht,
$R^2$ mindestens eine ist, die aus der Gruppe bestehend aus einer Urethanbindung, einer Amidbindung, einer Esterbindung und einer Etherbindung ausgewählt ist, und
$R^4$ eine Alkylengruppe ist, die einen Substituenten aufweisen kann.

**7.** Verfahren zum Herstellen von dreidimensionalen Objekten nach Anspruch 6,

wobei die aliphatische Verbindung mit den zwei oder mehr Isocyanatgruppen an dem Molekülende davon mindestens eine ist, die aus der Gruppe bestehend aus der Formel (1) und der Formel (2) ausgewählt ist, worin in der Formel (1) und der Formel (2)
das $R_1$ für eine Alkylengruppe mit 1 oder mehr, jedoch 6 oder weniger Kohlenstoffatomen steht,
das $R^2$ für eine Urethanbindung steht,

das $R^3$ für mindestens eine steht, die aus der Gruppe bestehend aus der Formel (1-2) und der Formel (1-3) ausgewählt ist, die jeweils einen Substituenten aufweisen können, worin $Y^1$ für eine Alkylgruppe mit 1 oder mehr, jedoch 4 oder weniger Kohlenstoffatomen steht und $Y^2$ bis $Y^4$ jeweils unabhängig für eine Alkylengruppe mit 1 oder mehr, jedoch 6 oder weniger Kohlenstoffatomen stehen, und
das $R^4$ für eine Alkylengruppe mit 1 oder mehr, jedoch 4 oder weniger Kohlenstoffatomen steht, die einen Substituenten aufweisen kann.

**8.** Verfahren zum Herstellen von dreidimensionalen Objekten nach Anspruch 7,

wobei die aliphatische Verbindung mit den zwei oder mehr Isocyanatgruppen an dem Molekülende davon mindestens eine ist, die aus der Gruppe bestehend aus der Formel (1) und der Formel (2) ausgewählt ist, worin in der Formel (1) und der Formel (2)
das $R_1$ für eine Alkylengruppe mit 6 Kohlenstoffatomen steht,
das $R^2$ für eine Urethanbindung steht,
das $R^3$ für mindestens eine steht, die aus der Gruppe bestehend aus der Formel (1-2) und der Formel (1-3) ausgewählt ist, worin $Y^1$ für eine Methylgruppe steht und $Y^2$ bis $Y^4$ für eine Alkylengruppe mit 6 Kohlenstoffatomen stehen, und
das $R^4$ für eine Alkylengruppe mit 2 Kohlenstoffatomen steht.

## Revendications

**1.** Procédé de production d'un objet tridimensionnel comprenant :

la formation d'une couche de matériau en poudre avec un matériau en poudre pour la formation d'un objet tridimensionnel, où le matériau en poudre inclut un matériau de base et une résine incluant un groupe fonctionnel réactif ; et
l'application d'un liquide de durcissement à la couche de matériau en poudre pour former un produit durci, où le liquide de durcissement contient un agent de durcissement capable de former une liaison covalente avec le groupe fonctionnel réactif,
dans lequel l'agent de durcissement inclut un composé aliphatique possédant deux groupes isocyanates ou plus à une terminaison moléculaire de celui-ci.

**2.** Procédé de production d'un objet tridimensionnel selon la revendication 1,
dans lequel la résine est au moins un choisi dans le groupe constitué de polyol et d'alcool polyvinylique.

**3.** Procédé de production d'un objet tridimensionnel selon les revendications 1 ou 2,

dans lequel le groupe fonctionnel réactif est un groupe hydroxyle, et
une expression : $0{,}1 \leq N_{[NCO]}/N_{[OH]}$ est satisfaite :

où $N_{[OH]}$ est une quantité en moles du groupe hydroxyle contenu dans le matériau en poudre par unité de volume pendant la formation d'un objet, et
$N_{[NCO]}$ est une quantité en moles du groupe isocyanate contenu dans le liquide de durcissement appliqué par unité de volume pendant la formation d'un objet, $N_{[OH]}$ et $N_{[NCO]}$ étant déterminés à partir de mesures par des procédés tels que décrits ici.

**4.** Procédé de production d'un objet tridimensionnel selon l'une quelconque des revendications 1 à 3,
dans lequel une quantité de l'agent de durcissement relativement à une quantité totale du liquide de durcissement est de 5,0 % en masse ou plus.

**5.** Procédé de production d'un objet tridimensionnel selon l'une quelconque des revendications 1 à 4,
dans lequel une valeur hydroxyle, telle que mesurée selon « JIS K 1557-1 Partie 1: Détermination de la valeur hydroxyle », de la résine est de 30 mg de KOH/g ou plus.

**6.** Procédé de production d'un objet tridimensionnel selon l'une quelconque des revendications 1 à 5,

dans lequel le composé aliphatique possédant les deux groupes isocyanates ou plus à la terminaison moléculaire

de celui-ci est au moins une choisie dans le groupe constitué de la Formule (1) et la Formule (2) ci-dessous :

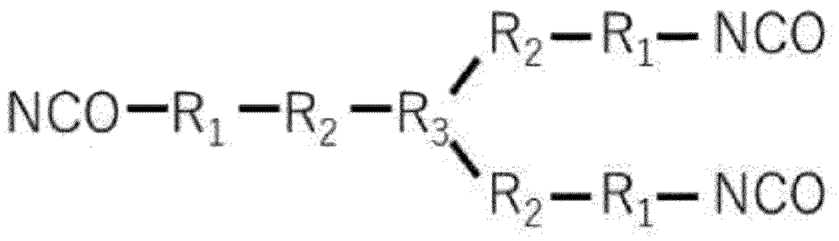

Formule (1)

où, dans la Formule (1),

$R_1$ représente un groupe hydrocarbure aliphatique,

$R_2$ est au moins une choisie dans le groupe constitué d'une liaison uréthane, d'une liaison amide, d'une liaison ester et d'une liaison éther, et

$R_3$ est représenté par au moins une choisie dans le groupe constitué de la Formule (1-1) à la Formule (1-6) ci-dessous qui peuvent chacune avoir un substituant, où, dans la Formule (1-1) à la Formule (1-6), $Y^1$ représente un groupe alkyle, et $Y^2$ à $Y^7$ représentent chacun indépendamment un groupe alkylène,

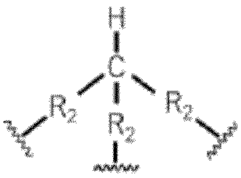

Formule (1-1)

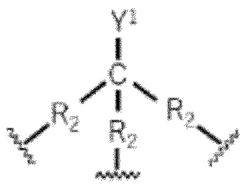

Formule (1-2)

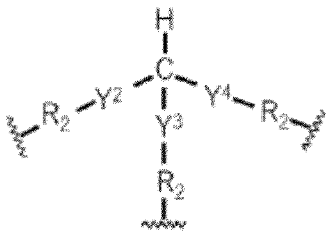

Formule (1-3)

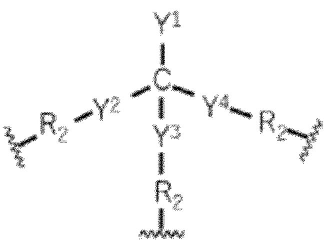

Formule (1-4)

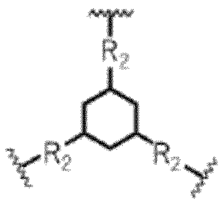

Formule (1-5)

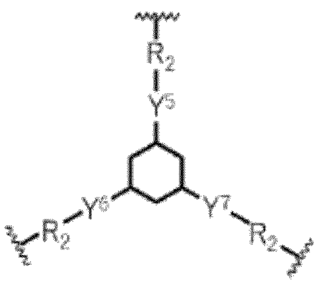

Formule (1-6)

$NCO-R_1-R_2-R_4-R_2-R_1-NCO$ Formule (2)

où, dans la Formule (2),

$R_1$ représente un groupe hydrocarbure aliphatique,

$R_2$ est au moins une choisie dans le groupe constitué d'une liaison uréthane, d'une liaison amide, d'une liaison ester et d'une liaison éther, et

$R_4$ est un groupe alkylène qui peut avoir un substituant.

**7.** Procédé de production d'un objet tridimensionnel selon la revendication 6,

dans lequel le composé aliphatique possédant les deux groupes isocyanates ou plus à la terminaison moléculaire de celui-ci est au moins une choisie dans le groupe constitué de la Formule (1) et la Formule (2),

où, dans la Formule (1) et la Formule (2),
le $R_1$ représente un groupe alkylène possédant 1 ou plus mais 6 ou moins atomes de carbone,
le $R_2$ représente une liaison uréthane,
le $R_3$ représente au moins une choisie dans le groupe constitué de la Formule (1-2) et la Formule (1-3), chacune pouvant avoir un substituant, où $Y^1$ représente un groupe alkyle possédant 1 ou plus mais 4 ou moins atomes de carbone, et $Y^2$ à $Y^4$ représentent chacun indépendamment un groupe alkylène possédant 1 ou plus mais 6 ou moins atomes de carbone, et
le $R_4$ représente un groupe alkylène possédant 1 ou plus, mais 4 ou moins, atomes de carbone qui peuvent avoir un substituant.

**8.** Procédé de production d'un objet tridimensionnel selon la revendication 7,

dans lequel le composé aliphatique possédant les deux groupes isocyanates ou plus à la terminaison moléculaire de celui-ci est au moins une choisie dans le groupe constitué de la Formule (1) et la Formule (2),
où, dans la Formule (1) et la Formule (2),
le $R_1$ représente un groupe alkylène possédant 6 atomes de carbone,
le $R_2$ représente une liaison uréthane,
le $R_3$ représente au moins une choisie dans le groupe constitué de la Formule (1-2) et la Formule (1-3), où $Y^1$ représente un groupe méthyle, et $Y^2$ à $Y^4$ représentent un groupe alkylène possédant 6 atomes de carbone, et
le $R_4$ représente un groupe alkylène possédant 2 atomes de carbone.

FIG. 1A

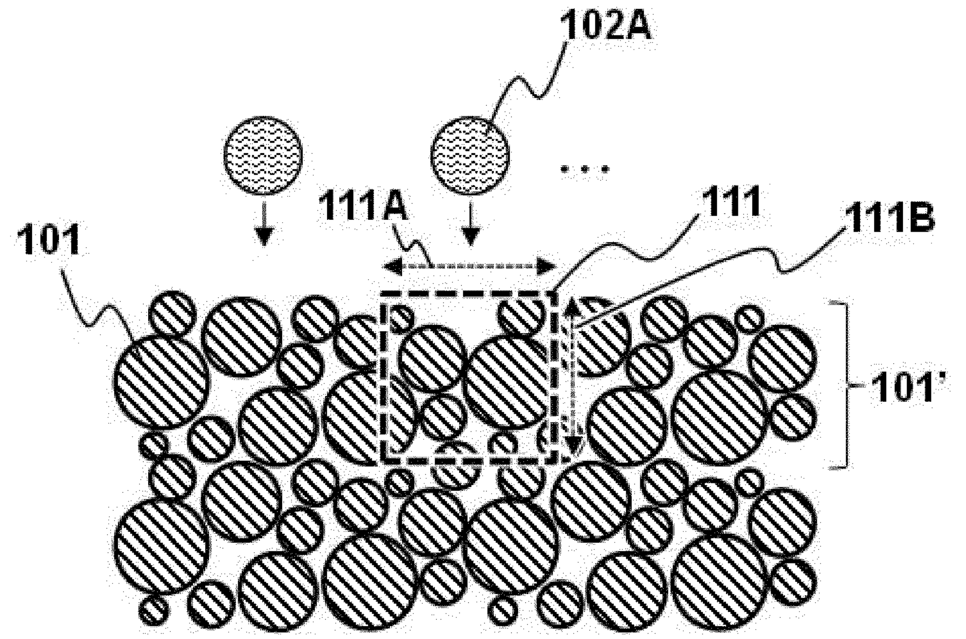


FIG. 1B

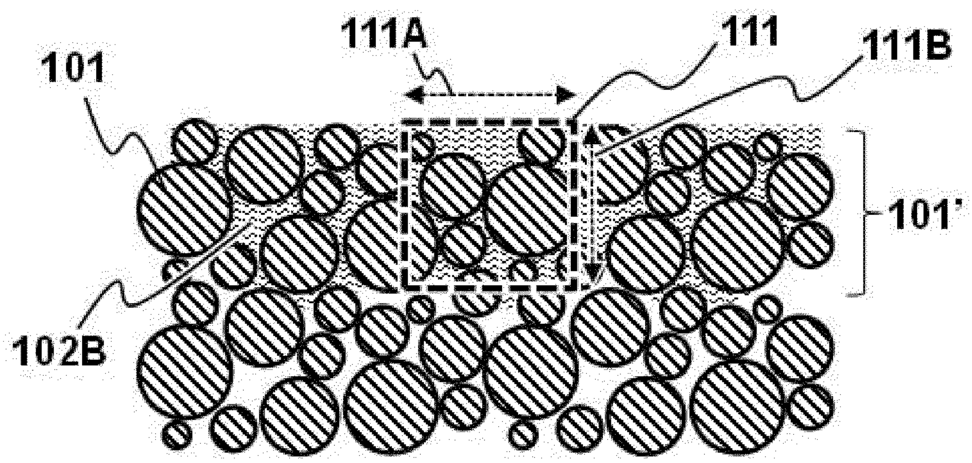

FIG. 2A

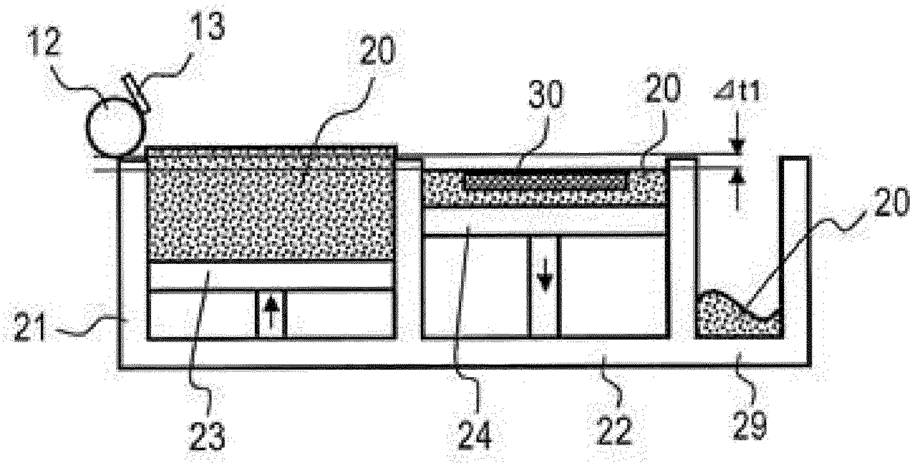


FIG. 2B

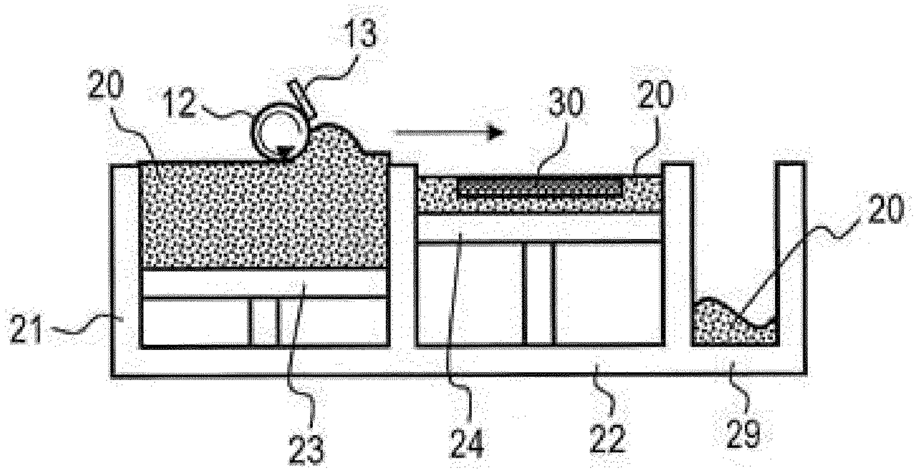

FIG. 2C

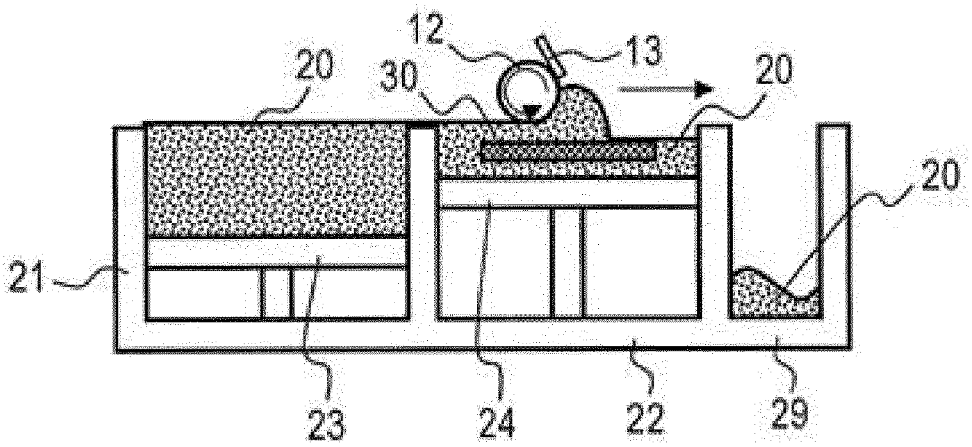


FIG. 2D

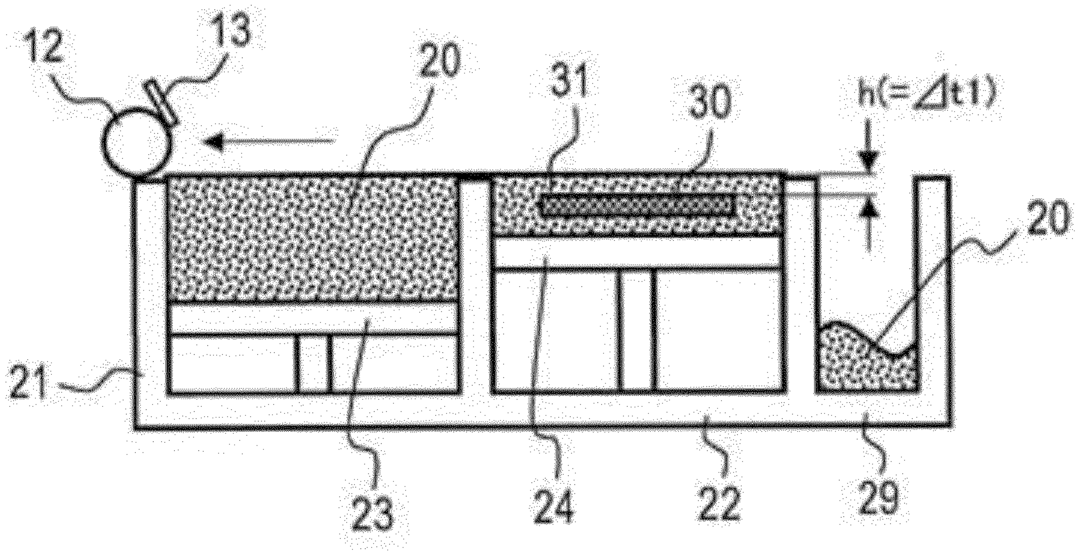

FIG. 2E

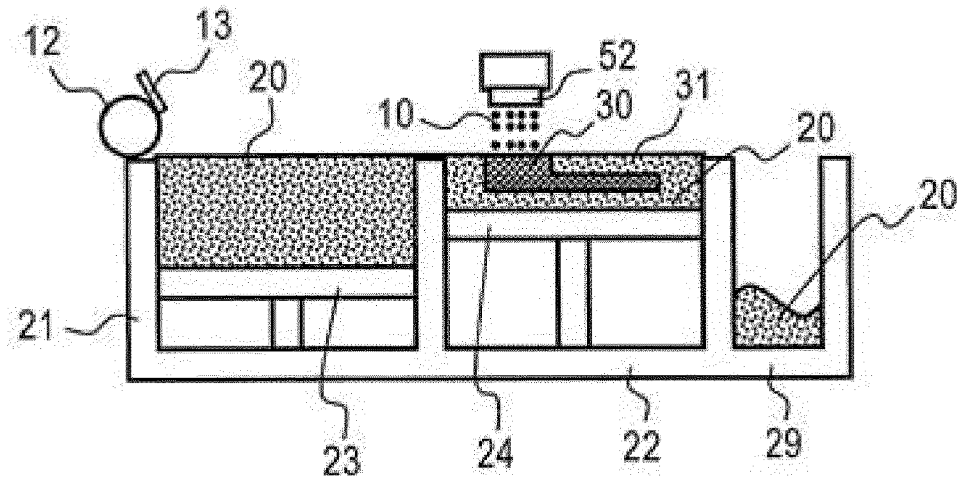

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000328106 A
- JP 2006200030 A
- JP 2003048253 A
- JP 2004330743 A
- JP 2005297325 A
- JP 5920498 B
- CN 108296416 A
- US 2015306821 A1
- JP 3607300 B